# FASCICULE DE BREVET EUROPEEN

(11) **EP 2 137 924 B1**
(45) Date de publication et mention de la délivrance du brevet: **06.06.2018**
(21) Numéro de dépôt: 08788019.1
(22) Date de dépôt: 18.03.2008
(51) Int. Cl.: H04L 29/06, H04M 3/54, H04M 3/42, H04M 7/00

(54) **PROCEDE ET SERVEUR DE ROUTAGE D'UN APPEL DESTINE A UN PREMIER TERMINAL VERS UN TERMINAL CIBLE**
VERFAHREN UND SERVER ZUR WEITERLEITUNG EINES RUFS AN EIN ENDGERÄT AUF EIN ZIELENDGERÄT
METHOD AND SERVER FOR ROUTING A CALL FOR A FIRST TERMINAL TOWARDS A TARGET TERMINAL

(30) Priorité: 26.03.2007 FR 0754023
(43) Date de publication de la demande: 30.12.2009
(73) Titulaire: Orange, 75015 Paris (FR)
(72) Inventeur: BOUILLE, Philippe, F-22560 Pleumeur Bodou (FR); TOUTAIN, François, F-22700 Louannec (FR)
(74) Mandataire: Delumeau, François Guy
(86) Numéro de dépôt international: PCT/FR2008/050460
(87) Numéro de publication internationale: WO 2008/135684

(56) Documents cités:
- EP-A- 1 017 210
- EP-A- 1 235 387
- "Digital cellular telecommunications system (Phase 2+); Universal Mobile Telecommunications System (UMTS); Service requirements for the Internet Protocol (IP) multimedia core network subsystem (IMS); Stage 1 (3GPP TS 22.228 version 7.5.0 Release 7); ETSI TS 122 228" ETSI STANDARDS, EUROPEAN TELECOMMUNICATIONS STANDARDS INSTITUTE, SOPHIA-ANTIPO, FR, vol. 3-SA1, no. V750, septembre 2006 (2006-09), XP014035444 ISSN: 0000-0001 cité dans la demande
- ROACH A B: "RFC 3265: Session Initiation Protocol (SIP) - Specific Event Notification" NETWORK WORKING GROUP REQUEST FOR COMMENTS, juin 2002 (2002-06), pages 1-38, XP002280672 cité dans la demande
- SPARKS DYNAMICSOFT R: "The Session Initiation Protocol (SIP) Refer Method; rfc3515.txt;" IETF STANDARD, INTERNET ENGINEERING TASK FORCE, IETF, CH, avril 2003 (2003-04), XP015009297 ISSN: 0000-0003 cité dans la demande

## Description

La présente invention se rapporte au domaine général des réseaux de télécommunications.

L'invention concerne plus particulièrement les technologies permettant le routage d'un appel destiné à un premier terminal vers un terminal cible.

Au sens de l'invention, lorsqu'un appel destiné à un premier terminal est routé vers un terminal cible, cela signifie que le terminal cible a été identifié pour être le nouveau destinataire de cet appel. Le routage de l'appel au sens de l'invention ne garantit pas pour autant que l'appel atteigne le terminal cible ou qu'il soit pris par le terminal cible. En effet, celui-ci peut être, par exemple, momentanément occupé ou ne pas pouvoir être atteint du fait de l'indisponibilité du réseau de télécommunications auquel il est connecté. Le routage consiste donc ici à aiguiller l'appel vers le terminal cible, par exemple en informant l'entité adaptée à acheminer l'appel de ce nouveau destinataire, en substituant l'adresse du destinataire dans le message d'appel, ou en envoyant au terminal appelant un message l'informant qu'il doit envoyer un message d'appel vers le terminal cible. Le routage ne désigne pas ici, à proprement parler, les étapes ou les moyens mis en oeuvre ultérieurement pour acheminer effectivement l'appel vers le terminal cible.

Dans l'état actuel de la technique, il existe des mécanismes permettant de renvoyer un appel destiné à un premier terminal vers un terminal cible, le numéro du terminal cible ayant été au préalable enregistré par l'utilisateur auprès d'un serveur afin d'être utilisé dans des conditions prédéterminées (renvoi inconditionnel, renvoi sur non-réponse, renvoi sur indisponibilité du terminal, etc.). Le numéro du terminal cible ainsi que les conditions de renvoi sont définis par l'utilisateur lors de l'activation du service de renvoi d'appel et sont utilisés pour renvoyer, à compter de l'activation du service, toutes les communications à destination de ce premier terminal répondant aux conditions de renvoi.

Cependant, au moment de la réception d'un appel, le terminal cible n'est pas nécessairement à cet instant le terminal le plus approprié pour recevoir l'appel. Par exemple, il se peut, qu'en fonction de l'appelant (ex. appel de type professionnel ou personnel), le terminal cible ne soit pas concerné par la communication renvoyée. Le choix du terminal cible étant effectué en amont, pour des conditions prédéterminées, lors de l'activation du service et de manière unique pour l'ensemble des communications à venir, il est très difficile de s'assurer, pour une communication donnée, qu'il s'agit d'un choix pertinent qui permettra à l'émetteur de l'appel de joindre le bon destinataire.

Le document EP 1 235 387 décrit un mécanisme permettant de renvoyer un appel destiné à un premier terminal vers un terminal cible (ex. un fax, un ordinateur portable) sélectionné par le premier terminal dans une liste de terminaux. Le premier terminal met à jour ladite liste en diffusant via une liaison de type Bluetooth®, un message de requête pour identifier les terminaux dans son voisinage. La réponse des terminaux à ce message de requête permet au premier terminal de déterminer les terminaux présents sur le réseau Bluetooth® et de mettre à jour la liste en conséquence.

Après avoir sélectionné le terminal cible dans la liste, le premier terminal vérifie si le terminal cible est libre. Le cas échéant, l'appel est renvoyé vers ce terminal cible via la liaison Bluetooth® ou via un réseau de télécommunications auquel le terminal cible est connecté.

Dans le document EP 1 235 387, la liste des terminaux parmi laquelle est sélectionné le terminal cible peut être mise à jour :
- indépendamment de la réception d'un appel, à intervalles de temps réguliers ou sur requête de l'utilisateur du premier terminal. Les informations relatives à la présence des terminaux et ainsi à leur accessibilité via la liaison Bluetooth® peuvent alors ne plus être pertinentes au moment de la réception d'un appel. En effet, un terminal que l'on éteint entre deux mises à jour de la liste reste à tort considéré comme accessible via la liaison Bluetooth® par le premier terminal. Afin de palier cet inconvénient, il est important de mettre souvent la liste à jour en diffusant fréquemment des messages de requête au détriment d'un bon usage de la bande passante, ce problème étant d'autant plus gênant que chaque terminal susceptible de recevoir un appel cherche à constituer sa propre liste ; ou
- à la réception d'un appel. La rapidité d'exécution du renvoi d'appel peut alors être détériorée en raison d'un temps de réponse trop long de la
- part des terminaux au message de requête pour mettre à jour la liste, notamment lorsque le nombre des terminaux au voisinage du premier terminal est important.

Le document EP 1 017 210 décrit un procédé pour router un appel entrant vers un terminal destinataire approprié.

Selon un premier aspect, l'invention vise un procédé de routage d'un appel destiné à un premier terminal vers un terminal cible, comportant :
- une étape de mise à jour d'une table associée à un identifiant du premier terminal, cette table comportant un identifiant d'au moins un second terminal et au moins un état de ce second terminal, cette étape de mise à jour de la table étant effectuée sur réception d'une notification émise par le second terminal pour signaler un changement d'un de ses états ;
- une étape d'établissement d'une liste à partir de la table, cette liste comportant au moins un identifiant d'un dit second terminal, cette étape d'établissement de la liste étant effectuée sur réception d'un message comportant un identifiant du premier terminal ;
- une étape d'envoi vers le premier terminal de la liste ;
- une étape de réception en provenance du premier terminal d'un identifiant du terminal cible sélectionné parmi la liste ; et
- une étape de routage de l'appel vers le terminal cible.

Corrélativement, l'invention concerne un serveur de routage d'un appel destiné à un premier terminal vers un terminal cible, comportant :
- des moyens pour recevoir une notification émise par un terminal pour signaler un changement d'un état de ce terminal ;
- des moyens pour mettre à jour une table associée à un identifiant dudit premier terminal, cette table comportant un identifiant d'au moins un second terminal et au moins un état de ce second terminal ;
- des moyens pour établir une liste à partir de cette table, cette liste comportant au moins un identifiant d'un dit second terminal, cette liste étant établie sur réception d'un message comportant un identifiant du premier terminal ;
- des moyens pour envoyer vers le premier terminal la liste ;
- des moyens pour recevoir en provenance du premier terminal un identifiant du terminal cible sélectionné parmi la liste ; et
- des moyens pour router l'appel vers le terminal cible.

Ainsi, le procédé et le serveur de routage selon l'invention permettent de router un appel destiné à un premier terminal vers un terminal cible, via une assistance textuelle proposée à l'utilisateur du premier terminal. Conformément à l'invention, cette assistance se présente sous la forme d'une liste de terminaux candidats potentiels pour le routage de l'appel.

Les terminaux identifiés dans la liste appartiennent à un ensemble de terminaux associés au premier terminal, ensemble par exemple défini en amont lors de la souscription de l'utilisateur du premier terminal à un service de routage d'appels mettant en oeuvre le procédé de routage selon l'invention.

Au sens de l'invention, différents états peuvent être associés à un terminal, chaque état pouvant prendre un nombre fini de valeurs prédéfinies. Citons par exemple :
- un état permettant de qualifier l'état d'alimentation d'un terminal, pouvant par exemple prendre les valeurs « allumé » ou « éteint » ;
- un état visant à qualifier l'état de connexion d'un terminal à un réseau de télécommunications, pouvant par exemple prendre les valeurs « connecté » ou « non connecté » ;
- un état reflétant si le terminal est candidat pour recevoir un appel selon le procédé de routage de l'invention, et par conséquent pour figurer dans la liste envoyée au premier terminal. Cet état peut par exemple prendre les valeurs « candidat » ou « non candidat » ou en variante, il peut prendre l'une des trois valeurs « candidat », « non candidat », « candidat sous conditions » ;
- etc.

Un terminal actif au sens de l'invention est un terminal « connecté » à un réseau de télécommunications et « candidat » pour le routage. Dans un mode particulier de réalisation de l'invention, un terminal notifie son passage à l'état actif en envoyant au serveur/procédé de routage selon l'invention un message de souscription au service de routage.

Dans un mode particulier de réalisation de l'invention, la mise à jour de la table en fonction des changements d'état signalés par les terminaux identifiés dans la table obéit en outre à des règles de mise à jour complémentaires prédéfinies. Ainsi, certains changements d'état signalés par un terminal peuvent induire une mise à jour dans la table d'autres états relatifs à ce terminal. Par exemple, selon une règle prédéfinie particulière, un terminal apparaissant initialement dans la table dans un état « allumé », « connecté », « candidat » et « actif », signalant un passage à l'état « éteint », apparaîtra dans la table après mise à jour dans un état « éteint », « non connecté », « candidat » et « non actif ».

La liste envoyée au premier terminal est une liste actualisée, établie de manière rapide au moment de l'appel puisqu'elle est déterminée à partir d'une table à jour en permanence, un changement d'état d'un terminal de la table étant notifié immédiatement par ce terminal au serveur/procédé de routage selon l'invention. Ainsi, aucun traitement coûteux de scrutation de l'état des terminaux de la table n'est nécessaire pour établir cette liste, que ce soit au niveau du premier terminal, du serveur de routage ou du réseau. Les terminaux de la table notifient dés que nécessaire un changement d'état au serveur/procédé de routage selon l'invention, par exemple lorsqu'ils sont sur le point de s'éteindre.

Sur réception de la liste, l'utilisateur du premier terminal sélectionne de manière simple et rapide le terminal cible vers lequel router l'appel, par exemple en tapant sur le clavier de son terminal un chiffre (i.e. un identifiant au sens de l'invention) associé au terminal cible dans la liste. L'invention limite ainsi le temps d'attente perçu par l'appelant avant que son appel ne soit acheminé vers le bon destinataire.

Par ailleurs, l'utilisateur du premier terminal a le choix parmi plusieurs terminaux pour le routage de l'appel qui lui est destiné, et peut alors sélectionner parmi la liste, l'identifiant du terminal qui lui parait le plus approprié pour router l'appel. Par exemple, un utilisateur du premier terminal reconnaissant qu'un appel entrant est destiné à son fils grâce à l'affichage du numéro du terminal appelant, peut sélectionner dans la liste, l'identifiant du terminal de son fils comme terminal cible afin que l'appel soit routé vers le terminal de son fils. Ainsi le routage d'appel n'est pas limité à un numéro unique et prédéfini pour tous les appels, mais peut être avantageusement adapté en fonction de la pertinence des terminaux.

La liste envoyée au premier terminal peut contenir implicitement une information relative à l'état des terminaux candidats. Par exemple, au cours de l'étape d'établissement de la liste, on n'établit la liste qu'avec des identifiants de terminaux actifs au sens de l'invention. Il peut s'agir par exemple d'une condition fixée au cours de la souscription de l'utilisateur du premier terminal au service de routage.

Dans un mode particulier de réalisation de l'invention, la liste comporte en outre une information relative à au moins un état du second terminal.

Ainsi, par exemple, la liste envoyée au premier terminal peut comporter des identifiants de terminaux candidats dans des états différents (ex. éteints ou actifs). Le procédé et le serveur de routage selon l'invention, en précisant dans la liste envoyée au premier terminal une information relative à l'état de ces terminaux candidats, permettent à l'utilisateur du premier terminal d'opérer un choix « éclairé » parmi la liste. Ainsi si l'utilisateur du premier terminal sélectionne un terminal actif, l'appel routé vers ce terminal actif aura plus de chances d'être pris par un utilisateur de ce terminal actif.

Dans un mode de réalisation particulier de l'invention, le message reçu comportant un identifiant du premier terminal comporte une requête d'établissement de l'appel.

Le message reçu à l'origine du routage selon l'invention est par exemple le message d'appel émis par le terminal appelant, ou un message comportant ce message d'appel. Ceci permet avantageusement au procédé et au serveur de routage selon l'invention de proposer le routage de l'appel au premier terminal avant qu'il ne prenne l'appel, c'est-à-dire avant que l'utilisateur du premier terminal ne décroche le premier terminal. L'invention permet ainsi un renvoi de l'appel destiné au premier terminal vers le terminal cible.

Dans un mode de réalisation particulier de l'invention, le message reçu comportant un identifiant du premier terminal comporte une requête de transfert de l'appel.

Ainsi le procédé et le serveur de routage selon l'invention permettent également la mise en place d'un transfert de l'appel du premier terminal vers le terminal cible. Ils permettent en effet de router l'appel après qu'il a été pris par le premier terminal alors qu'une communication entre le terminal appelant et le premier terminal est en cours. Sur requête du premier terminal, le procédé et le serveur de routage selon l'invention envoient au premier terminal une liste de terminaux afin que l'utilisateur du premier terminal puisse choisir le terminal cible approprié pour le transfert d'appel.

Comme décrit précédemment, les terminaux de la table associée au premier terminal (i.e. table associée à un identifiant du premier terminal) ne sont pas tous nécessairement, à un moment donné, actifs au sens de l'invention. Par exemple, certains terminaux peuvent être dans un état « éteint » au moment de l'appel ou de manière plus générale dans un état « non connecté » à un réseau de télécommunications leur permettant de recevoir un appel. Un terminal qui n'est pas actif au sens de l'invention peut également être dans un état « connecté » à un réseau mais être dans un état « non candidat » au service de routage, par exemple parce qu'il n'est pas enregistré auprès du service de routage, l'utilisateur de ce terminal ne désirant pas que des appels soient routés vers son terminal. Il peut être alors avantageux pour l'utilisateur du premier terminal de recevoir une liste ne comportant que les terminaux actifs de la table, ou au moins un terminal actif.

Ainsi dans un mode particulier de réalisation, au cours de l'étape d'établissement de la liste du procédé de routage selon l'invention, on établit la liste avec au moins un identifiant d'un terminal actif.

Corrélativement, les moyens d'établissement de la liste du serveur de routage selon l'invention établissent la liste avec au moins un identifiant d'un terminal actif.

Cette caractéristique de l'invention permet avantageusement de ne proposer au premier terminal que des terminaux aptes *a priori* à recevoir l'appel. Ceci ne présuppose pas cependant pour autant de la disponibilité du terminal sélectionné ni ne garantit que l'appel routé soit établi avec le terminal cible sélectionné. Celui-ci peut être en effet occupé ou situé dans une zone non couverte par l'opérateur du réseau de télécommunications.

Dans un mode de réalisation particulier, au cours de l'étape d'établissement de la liste du procédé de routage selon l'invention, on établit la liste avec au moins un identifiant d'un terminal éteint.

Corrélativement, les moyens d'établissement de la liste du serveur de routage selon l'invention établissent la liste avec au moins un identifiant d'un terminal éteint.

Ce terminal éteint est par exemple dans un état « candidat » dans la table du serveur de routage, c'est-à-dire, que bien que le terminal soit éteint, ce terminal accepte de figurer dans la liste envoyée au premier terminal selon le procédé de routage de l'invention. La sélection par le premier terminal d'un terminal éteint dans la liste peut permettre avantageusement de router l'appel destiné au premier terminal vers le serveur de messagerie vocale du terminal éteint.

Dans un mode particulier de réalisation, le procédé de routage selon l'invention comporte en outre, suite à l'étape de routage, une étape d'envoi vers le premier terminal d'un message comportant une confirmation que l'appel a été routé vers le terminal cible.

Selon un deuxième aspect, l'invention vise un procédé de sélection d'un terminal cible, pouvant être mis en oeuvre dans un premier terminal connecté à un réseau de télécommunications, en vue de router un appel destiné à ce premier terminal vers le terminal cible, le procédé comportant :
- une étape de réception d'un message comportant une requête d'établissement de l'appel ; et
- une étape de sélection parmi une liste d'un identifiant du terminal cible.
Conformément à l'invention, ce procédé de sélection comporte en outre :
- une étape de réception, via le réseau de télécommunications, de la liste en provenance d'un serveur de routage, cette liste comportant au moins un identifiant d'un terminal ; et
- une étape d'envoi au serveur de routage de l'identifiant du terminal cible.

Corrélativement, l'invention vise un terminal connecté à un réseau de télécommunications comportant :
- des moyens pour recevoir un message comportant une requête d'établissement d'un appel ; et
- des moyens pour sélectionner parmi une liste, un identifiant du terminal cible.
Conformément à l'invention, ce terminal comporte en outre :
- des moyens pour recevoir, via le réseau de télécommunications, une liste en provenance d'un serveur de routage comportant au moins un identifiant d'un terminal ; et
- des moyens pour envoyer l'identifiant du terminal cible au serveur de routage.

Ainsi, le procédé de sélection et le terminal selon l'invention permettent à un utilisateur du terminal selon l'invention, destinataire d'un appel, de sélectionner parmi une liste de plusieurs terminaux un terminal cible vers lequel router l'appel. Dans un mode de réalisation particulier de l'invention, cette liste peut avantageusement associer à chaque terminal un chiffre, permettant ainsi à l'utilisateur de sélectionner un terminal rapidement en appuyant simplement sur une touche de son terminal.

Dans un mode particulier de réalisation de l'invention, la liste reçue du serveur de routage comporte en outre, pour chaque terminal identifié, une information relative à au moins un état de ce terminal.

Dans un mode particulier de réalisation de l'invention, la liste reçue du serveur de routage est incluse dans le message reçu par le terminal selon l'invention comportant la requête d'établissement de l'appel. Ceci permet avantageusement de sélectionner un terminal dans le cadre d'un renvoi d'appel. Dans ce mode particulier de réalisation de l'invention, le terminal destinataire selon l'invention reçoit directement dans le même message la requête d'établissement d'appel et la liste des terminaux vers lesquels l'appel peut être routé, par exemple sous la forme d'une proposition de renvoi de l'appel vers l'un des terminaux de la liste affichée sur l'écran du terminal en même temps que l'appel est signalé par une sonnerie. Le renvoi d'appel est alors effectué après la présentation de l'appel à l'utilisateur du terminal destinataire de l'appel mais avant l'établissement de l'appel, sur simple sélection d'un terminal de la liste.

Dans un mode particulier de réalisation, le procédé de sélection selon l'invention comporte suite à l'étape de réception du message comportant la requête d'établissement de l'appel, une étape de prise de l'appel. Conformément à l'invention, dans ce mode particulier de réalisation, l'étape de réception de la liste fait suite à une étape d'envoi vers le serveur de routage d'un message comportant une requête de transfert de cet appel.

Corrélativement le terminal selon l'invention comporte :
- des moyens pour prendre l'appel suite à la réception du message comportant la requête d'établissement de l'appel ; et
- des moyens pour envoyer au serveur de routage un message comportant une requête de transfert de cet appel.

Ainsi le procédé de sélection et le terminal selon l'invention permettent également de router un appel préalablement établi, c'est-à-dire de transférer un appel en cours sur requête du terminal ayant pris l'appel.

Dans un mode particulier de réalisation, le terminal selon l'invention comporte en outre des moyens pour décliner la requête d'établissement d'appel.

Dans un mode particulier de réalisation, le terminal selon l'invention comporte en outre des moyens pour recevoir un message de confirmation que ledit appel a été routé vers le terminal cible.

Selon un troisième aspect, l'invention vise un système de télécommunications comportant :
- un serveur de routage conforme à l'invention ;
- un premier terminal conforme à l'invention ; et
- au moins un second terminal, adapté à envoyer audit serveur de routage une notification pour signaler un changement d'au moins un de ses états.
Conformément à l'invention le serveur de routage du système de télécommunications selon l'invention permet de router un appel destiné au premier terminal vers un terminal cible sélectionné parmi ledit au moins un second terminal.

Dans un mode particulier de réalisation de l'invention, le premier terminal et au moins un second terminal du système de télécommunications selon l'invention sont connectés à des réseaux de télécommunications différents. En particulier le premier terminal et au moins un des terminaux identifiés dans la liste établie par le serveur de routage selon l'invention sont connectés à des réseaux de télécommunications différents.

Ces réseaux peuvent être notamment de type différent. Ainsi, à titre d'exemple, l'un des deux réseaux peut être un réseau « fixe » - par exemple, réseau VoIPoDSL (Voice over IP over Digital Subscriber Line) permettant de transporter de la voix sur protocole Internet (Voice over IP ou VoIP en anglais), réseau RNIS (Réseau Numérique à Intégration de Services), etcs.-, et l'autre un réseau « mobile » - par exemple, réseau mobile 2.5G GSM/GPRS (Global System for Mobile communications/General Packet Radio Service) ou UMTS (Universal Mobile Telecommunication System), etc.

En variante, deux réseaux différents peuvent désigner également deux réseaux de même type « fixe » ou « mobile » mais opérés par des opérateurs différents.

Ainsi, conformément à l'invention, la liste établie par le serveur de routage peut comporter des identifiants de terminaux associés au premier terminal connectés à des réseaux de télécommunications, d'une part distincts du réseau du premier terminal, mais également, distincts entre eux. A titre d'exemple, la liste établie peut donc comprendre, pour un premier terminal fixe connecté à un réseau VoIPoDSL opéré par un opérateur A, l'identifiant d'un terminal mobile connecté à un réseau mobile de type GSM/GPRS opéré par un opérateur B, l'identifiant d'un terminal mobile connecté à un réseau de type GSM/GPRS opérateur par un opérateur C, l'identifiant d'un terminal fixe connecté à un réseau VoIPoADSL opéré par un opérateur D, etc.

Dans un mode particulier de réalisation de l'invention, dans le système de télécommunications selon l'invention, le premier terminal et le terminal cible sont connectés à des réseaux de télécommunications différents.

Le serveur de routage et le système de télécommunications selon l'invention permettent ainsi notamment le routage d'un appel destiné à un premier terminal de type « fixe » vers un terminal cible de type « mobile » et inversement. Ils permettent en conséquence avantageusement le routage d'appels destinés à des terminaux de voix sur IP (VoIP) vers des terminaux connectés à un réseau mobile (et inversement), les deux mondes de voix sur IP et de téléphonie mobile étant dans l'état actuel de la technique séparés pour ce type de fonctionnalités.

L'invention a par conséquent une application privilégiée mais non limitative dans un contexte de convergence entre les réseaux fixes et mobiles. Elle permet dans ce contexte, grâce à la table mise à jour par le serveur de routage selon l'invention, de détecter la convergence d'un terminal fixe (respectivement mobile), c'est-à-dire de détecter si, lors de la réception d'une requête d'établissement d'appel avec ce terminal fixe (respectivement mobile) ou d'une requête d'un transfert d'appel du terminal fixe (respectivement mobile), un ou plusieurs terminaux mobiles (respectivement fixes) actifs sont associés au terminal fixe (respectivement mobile). Par ailleurs, l'invention permet dans ce contexte de convergence fixe/mobile de proposer au terminal fixe (respectivement mobile) convergent, une assistance textuelle pour router un appel qui lui est destiné vers un terminal mobile (respectivement fixe) actif.

Dans un mode de réalisation particulier de l'invention, dans le système de télécommunications selon l'invention, le premier terminal et le terminal cible sont connectés au même réseau de télécommunications.

Dans un mode particulier de réalisation, les différentes étapes du procédé de routage selon l'invention ainsi que les différentes étapes du procédé de sélection selon l'invention sont déterminées par des instructions de programmes d'ordinateurs.

En conséquence, l'invention vise aussi un programme d'ordinateur sur un support d'informations, ce programme étant susceptible d'être mis en oeuvre dans un serveur de routage selon l'invention ou plus généralement dans un ordinateur, ce programme comportant des instructions adaptées à la mise en oeuvre des étapes d'un procédé de routage tel que décrit ci-dessus.

L'invention vise également un programme d'ordinateur sur un support d'informations, ce programme étant susceptible d'être mis en oeuvre dans un terminal selon l'invention ou plus généralement dans un ordinateur, ce programme comportant des instructions adaptées à la mise en oeuvre des étapes d'un procédé de sélection tel que décrit ci-dessus.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que ceux mentionnés ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres caractéristiques et avantages de la présente invention ressortiront de la description faite ci-dessous, en référence aux annexes et dessins qui en illustrent un exemple de réalisation dépourvu de tout caractère limitatif, et dans lesquels :
- l'annexe 1 représente un extrait d'une base de données du serveur de routage selon l'invention, comportant notamment une table associée à un identifiant du premier terminal conforme à l'invention, dans un mode de réalisation particulier ;
- la figure 1 représente un système de télécommunications conforme à l'invention dans un mode particulier de réalisation ;
- la figure 2A représente, sous forme d'organigramme, les principales étapes d'un procédé de routage d'un appel conforme à l'invention lorsqu'il permet un renvoi d'appel vers un terminal cible, dans un mode particulier de réalisation ;
- la figure 2B représente, sous forme d'organigramme, les principales étapes d'un procédé de sélection selon l'invention lorsqu'il est mis en oeuvre dans le cadre d'un renvoi d'un appel vers un terminal cible, dans un mode particulier de réalisation ;
- la figure 3A représente, sous forme d'organigramme, les principales étapes d'un procédé de routage d'un appel conforme à l'invention lorsqu'il permet un transfert d'appel vers un terminal cible en cours de communication, dans un mode particulier de réalisation ;
- la figure 3B représente, sous forme d'organigramme, les principales étapes d'un procédé de sélection selon l'invention lorsqu'il est mis en oeuvre dans le cadre d'un transfert d'un appel vers un terminal cible en cours d'une communication, dans un mode particulier de réalisation.

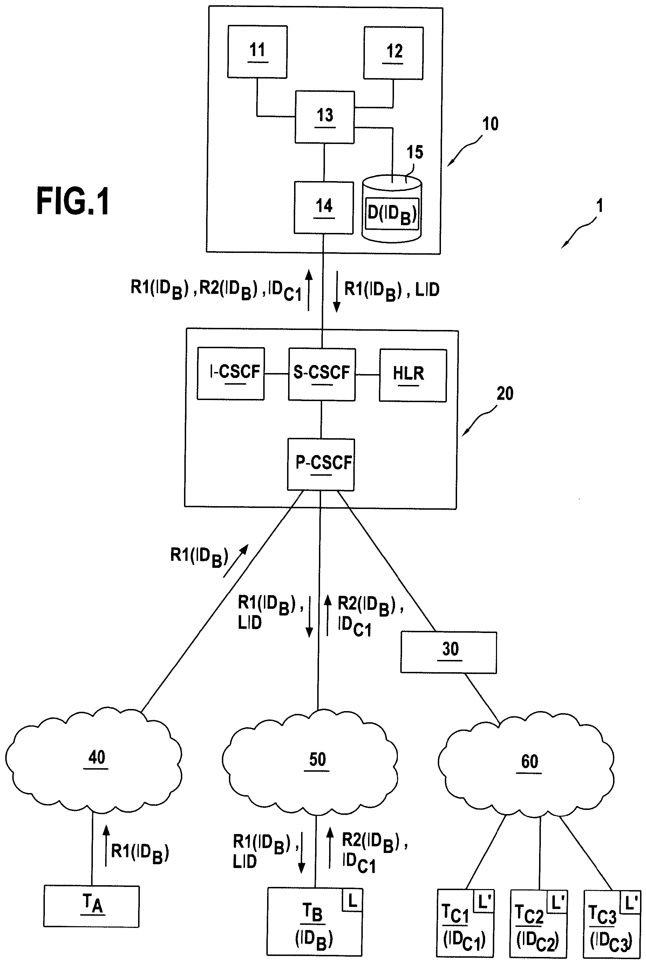

La **figure 1** représente un système de télécommunications 1 conforme à l'invention dans son environnement. On se place ici dans un contexte de convergence fixe vers mobile.

Ce système de télécommunications 1 comporte notamment un premier terminal T_{B} conforme à l'invention et connecté à un réseau de télécommunications 50, des terminaux T_{C1}, T_{C2} et T_{C3} identifiés respectivement par les identifiants ID_{C1}, ID_{C2} et ID_{C3} sur le réseau de télécommunications 60 (seconds terminaux au sens de l'invention) et un serveur de routage 10 conforme à l'invention, décrits ultérieurement.

Dans l'exemple de réalisation décrit ici, on considère par ailleurs un réseau IMS (IP Multimedia Subsystem) 20, tel que défini dans le standard 3GPP. Ce réseau IMS est composé notamment de trois types de serveurs, à savoir les serveurs I-CSCF (Interrogating Call Session Control Function), S-CSCF (Serving Call Session Control Function) et P-CSCF (Proxy Call Session Control Function). Ces serveurs sont chargés du contrôle de la signalisation SIP (Session Initiation Protocol) dans le réseau 20. La structure et les composants de ce réseau IMS 20 sont décrits dans le document 3GPP TS 22.228 « Service requirements for the IP Multimedia Core Network Subsystem (Stage 1) », disponible sur le site www.3gpp.org.

Ce réseau IMS 20 peut inter-fonctionner avec tout type de réseaux d'accès, fixe ou mobile. Ces réseaux peuvent être aussi bien des réseaux dits filaires ou des réseaux sans fil. Ainsi, dans l'exemple décrit ici, le réseau IMS 20 est connecté à des réseaux différents, à savoir :
- au réseau IP (Internet Protocol) fixe 50 ;
- à un réseau quelconque 40 ; et
- à un réseau mobile 60.

On suppose par exemple ici que le réseau 40 est conforme à l'architecture IMS et que le réseau mobile 60 est un réseau mobile 2.5G, GSM et GPRS.

Dans un tel réseau 2.5G, un appel de type « audio » est établi via le réseau GSM (connexion circuit), non-conforme à l'architecture IMS, et qui ne permet pas notamment d'échanger des messages conformes au protocole SIP. Pour permettre la connectivité du réseau IMS 20 avec le réseau 60, et en particulier l'échange de signalisation et des flux média associés à un appel faisant intervenir un terminal du réseau 60, une passerelle 30 est utilisée. Cette passerelle a notamment la fonction de traduire les messages issus du réseau 60 à destination du réseau IMS 20 en des messages conformes au protocole SIP, et inversement. Notons cependant, que pour des échanges de type données uniquement (connexion en mode paquet) entre le réseau IMS 20 et le réseau 2.5G 60, il est possible de passer par le réseau « overlay » GPRS, sans passer par la passerelle 30.

Pour chaque réseau de télécommunications considéré (40, 50 et 60), on considère un certain nombre de terminaux adaptés à communiquer via ce réseau, via des moyens de communications connus de l'homme du métier. Chaque terminal adapté à communiquer via un réseau est identifié par un identifiant sur ce réseau. Dans l'exemple décrit ici :
- le terminal T_{A} est connecté au réseau 40 et identifié sur le réseau 40 par l'identifiant ID_{A} ;
- le terminal T_{B} est connecté au réseau IP fixe 50 et identifié sur le réseau 50 par l'identifiant ID_{B} ;
- les terminaux T_{C1}, T_{C2} et T_{C3} sont connectés au réseau mobile 60 et identifiés sur le réseau 60 respectivement par les identifiants ID_{C1}, ID_{C2} et ID_{C3}.

Les terminaux T_{A}, T_{B}, T_{C1}, T_{C2} et T_{C3} sont ici des terminaux téléphoniques. Ils disposent de moyens de communication sur leurs réseaux de télécommunications respectifs, incluant notamment des moyens pour recevoir des messages d'appel, des moyens pour prendre un appel et des moyens pour décliner un appel. Le terminal T_{B} dispose par ailleurs d'un écran, permettant à son utilisateur de visualiser des messages et d'un clavier permettant de sélectionner un élément parmi une liste.

En variante, il peut s'agir d'autres types de terminaux comme par exemple des ordinateurs de type PC (Personal Computer), adaptés à recevoir et à prendre des appels via un réseau proposant de la voix sur IP par exemple.

Le réseau IMS 20 est par ailleurs relié au serveur de routage 10 conforme à l'invention. Ce serveur de routage 10 est, par exemple, un serveur d'application au sens de l'architecture IMS. Il a l'architecture matérielle d'un ordinateur. Il comporte un processeur 13, une mémoire vive 12, une mémoire morte 11 et des moyens de communication 14 selon le protocole SIP. Ces moyens de communication 14 lui permettent de communiquer (envoi et réception de messages) avec le réseau IMS 20 et notamment, via ce réseau, avec des terminaux adaptés à émettre et recevoir des messages selon le protocole SIP. De tels terminaux sont par exemple des terminaux SIP, des terminaux disposant après téléchargement d'une pile de protocole SIP ou des terminaux quelconques connectés à un réseau de télécommunications muni d'une passerelle (telle que la passerelle 30) permettant la traduction du protocole SIP en un protocole supporté par le réseau de télécommunications (et inversement).

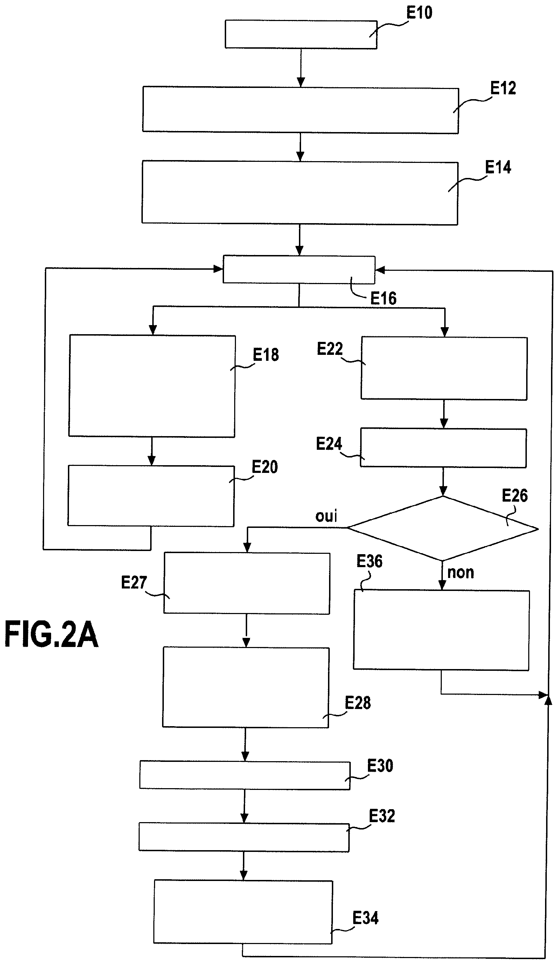

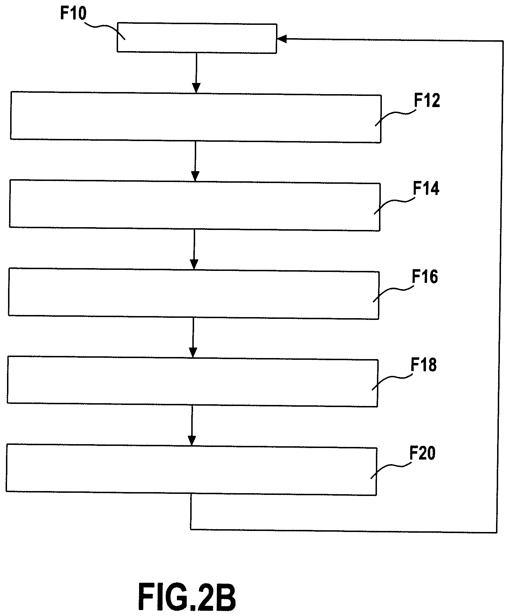

La mémoire morte 11 du serveur de routage 10 décrit ici comporte un programme informatique adapté à exécuter les principales étapes du procédé de routage selon l'invention, ces principales étapes étant représentées sous la forme d'un organigramme dans deux modes d'opération de l'invention (renvoi et transfert d'appel) sur les figures 2A et 2B décrites ultérieurement.

On suppose ici que le procédé de routage selon l'invention est implémenté sous la forme d'un service S de routage d'appel (renvoi/transfert) offert par l'opérateur du réseau IMS 20, moyennant la souscription des utilisateurs souhaitant bénéficier de ce service S. Cette souscription au service S peut se faire par exemple via une page web.

Lors de la souscription d'un utilisateur au service S, par exemple ici de l'utilisateur B du terminal T_{B} connecté au réseau IP fixe 50, l'utilisateur indique :
- un identifiant ID_{B} de son terminal T_{B} sur le réseau IP 50, par exemple ici, un numéro téléphonique TEL-URI tel que défini dans le document RFC 3261 «SIP : Session Initiation Protocol ». En variante, l'identifiant ID_{B} du terminal T_{B} est une adresse SIP-URI telle que définie dans le document précité ; et
- pour chaque terminal qu'il souhaite associer à son terminal T_{B} pour le service de routage, un identifiant de ce terminal sur le réseau de télécommunications auquel il est rattaché. Un tel identifiant est par exemple un numéro de téléphone du terminal sur ce réseau de télécommunications, comme le MSISDN (Mobile Station ISDN Number) pour un téléphone mobile.

Dans l'exemple décrit ici, l'utilisateur B enregistre en association avec son terminal T_{B} les identifiants respectifs, ID_{C1}, ID_{C2} et ID_{C3} des terminaux T_{C1}, T_{C2} et T_{C3} sur le réseau 60. On suppose par exemple ici que :
ID_{B} = 0950123456,
ID_{C1}= 0611111111,
ID_{C2} = 0622222222,
ID_{C3} = 0633333333.

Les terminaux T_{C1}, T_{C2} et T_{C3} sont tous connectés ici au même réseau, à savoir le réseau mobile 60, différent du réseau 50 auquel est connecté le terminal T_{B}.

Cette hypothèse n'est en aucun cas limitative. Le serveur de routage 10 selon l'invention est adapté à gérer le routage d'un appel destiné à un premier terminal vers un terminal cible dans des configurations différentes de celle précitée. Par exemple, les terminaux T_{C1}, T_{C2} et T_{C3} peuvent être connectés à des réseaux distincts M₁, M₂ et M₃ ; les identifiants ID_{C1}, ID_{C2} et ID_{C3} identifient alors respectivement les terminaux T_{C1} sur le réseau M₁, T_{C2} sur le réseau M₂ et T_{C3} sur le réseau M₃. Dans une autre configuration, les terminaux T_{B}, T_{C1}, T_{C2} et T_{C3} sont tous connectés au même réseau 50 et les identifiants ID_{C1}, ID_{C2} et ID_{C3} identifient respectivement les terminaux T_{C1}, T_{C2} et T_{C3} sur le réseau 50.

Les identifiants des terminaux T_{C1}, T_{C2} et T_{C3} sont mémorisés dans une table D(ID_{B}) associée à l'identifiant ID_{B} du terminal T_{B} et stockée dans une base de données 15 du serveur de routage 10. Au cours du déroulement du procédé de routage selon l'invention, les candidats potentiels pour le routage (renvoi ou transfert) d'un appel destiné à T_{B} seront pris parmi les terminaux T_{C1}, T_{C2} et T_{C3}.

Dans l'exemple décrit ici, les identifiants des terminaux enregistrés lors de la souscription sont les numéros de téléphone des terminaux T_{C1}, T_{C2} et T_{C3} sur le réseau 60. Lors de la souscription au service S, l'utilisateur B a également la possibilité de rattacher à chaque terminal T_{Ci} (i=1,2,3) un ou plusieurs autres identifiants, tel qu'un nom, un pseudonyme et/ou un identifiant abrégé (par exemple un chiffre ; en variante, ce chiffre est associé automatiquement au moment de la souscription à chaque terminal enregistré par l'utilisateur B). Ces identifiants sont également mémorisés dans la table D(ID_{B}) de la base de données 15 en association avec le terminal T_{Ci} (i=1,2,3). Ceci permet avantageusement au serveur de routage 10 de présenter au terminal T_{B} une liste sous une forme plus conviviale comportant une série de noms et d'identifiants (numéros) abrégés pour désigner chaque terminal T_{C1}, T_{C2} et T_{C3}. Par exemple : « 1 » et « Papa » pour T_{C1}, « 2 » et « Maman » pour T_{C2}, « 3 » et « Alice » pour T_{C3}). L'utilisateur B peut ainsi sélectionner plus rapidement, via par exemple une seule touche correspondant à l'identifiant abrégé, le terminal cible T_{Ci} (i=1, 2 ou 3) vers lequel il souhaite router l'appel.

Dans ce cas, une fois l'identifiant abrégé sélectionné dans la liste reçu, la consultation de la table D(ID_{B}) permet au serveur de routage 10 de retrouver le numéro ID_{Ci} de téléphone du terminal correspondant à l'identifiant abrégé choisi afin de router l'appel.

Un exemple du contenu de la table D(ID_{B}) associée à l'identifiant ID_{B} du terminal T_{B} est donné en **annexe 1.** Cette table D(ID_{B}) est ici comprise dans une base de données 15 du serveur de routage 10, qui comprend les tables D(ID_{X}) de tous les terminaux X ayant souscrit au service S de routage. La table D(ID_{B}) associée à l'identifiant ID_{B} du terminal T_{B} est délimitée par un cadre noir épais en annexe 1.

Dans cette table D(ID_{B}) :
- la colonne (1) contient l'identifiant ID_{B} du terminal T_{B} pour lequel le service de routage d'appel a été souscrit. Il s'agit ici du terminal T_{B} désigné par son numéro TEL-URI ID_{B}=0950123456 ;
- la colonne (2) indique les identifiants téléphoniques ID_{C1}, ID_{C2} et ID_{C3} sur le réseau mobile 60, des terminaux T_{C1}, T_{C2} et T_{C3} associés au terminal T_{B} lors de la souscription au service de routage d'appel ;
- la colonne (3) indique, pour chaque terminal T_{Ci} i=1,2,3, un second identifiant, à savoir ici un nom ; et
- la colonne (4) indique, pour chaque terminal T_{Ci} i=1,2,3, un troisième identifiant, à savoir ici un identifiant (numéro) abrégé ; et
- les colonnes (5), (6), (7) et (8) désignent, pour chaque terminal T_{C1}, les états associés à ce terminal.

Le serveur de routage 10 peut utiliser avantageusement les différents identifiants mémorisés dans les colonnes (2), (3) et (4) selon ses besoins, la correspondance entre ces identifiants étant disponible dans la table D(ID_{B}).

Dans l'exemple décrit ici, quatre états sont associés à chaque terminal T_{Ci} :
- dans la colonne (5), un état pouvant prendre les valeurs « allumé » ou « éteint » reflétant l'état d'alimentation de chaque terminal T_{Ci} ;
- dans la colonne (6), un état pouvant prendre les valeurs « connecté » ou « non connecté » reflétant l'état de connexion de chaque terminal T_{Ci} au réseau sur lequel il est identifié par son identifiant ID_{Ci} ;
- dans la colonne (7), un état pouvant prendre les valeurs « candidat » ou « non candidat », reflétant si le terminal T_{Ci} accepte ou non de figurer parmi la liste envoyée au terminal T_{B} au cours du procédé de routage selon l'invention ; et
- dans la colonne (8), un état pouvant prendre les valeurs « actif » ou « non actif », reflétant l'état d'activité du terminal T_{Ci}. Pour rappel, un terminal actif au sens de l'invention est « connecté » à un réseau et « candidat ».

Cette liste d'états n'est en aucun cas figée ni exhaustive. En variante, d'autres états peuvent être considérés.

Dans l'exemple décrit ici, au cours de l'étape de souscription du terminal T_{B} au service S, les états (5), (6), (7) et (8) de chaque terminal T_{Ci} sont initialisés respectivement aux valeurs « éteint », « non connecté », « non candidat » et « non actif ».

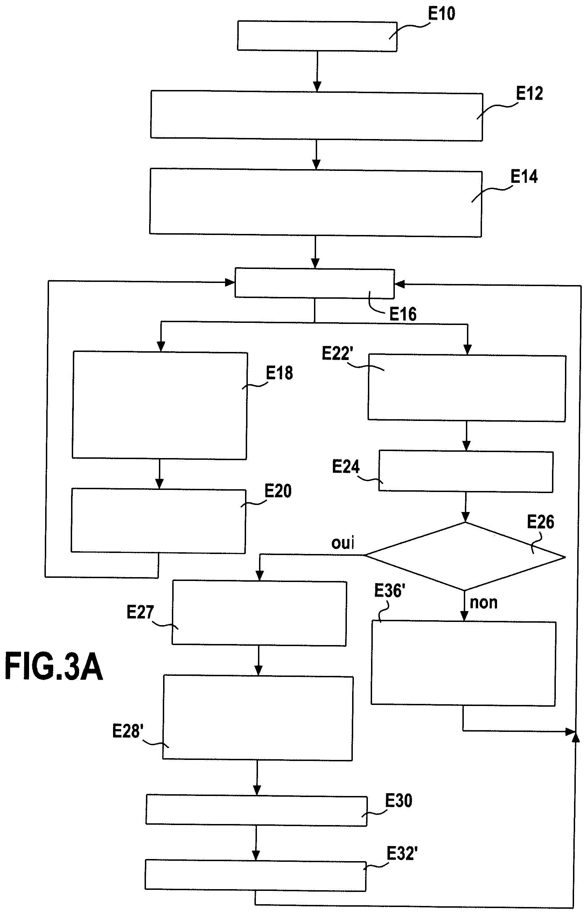

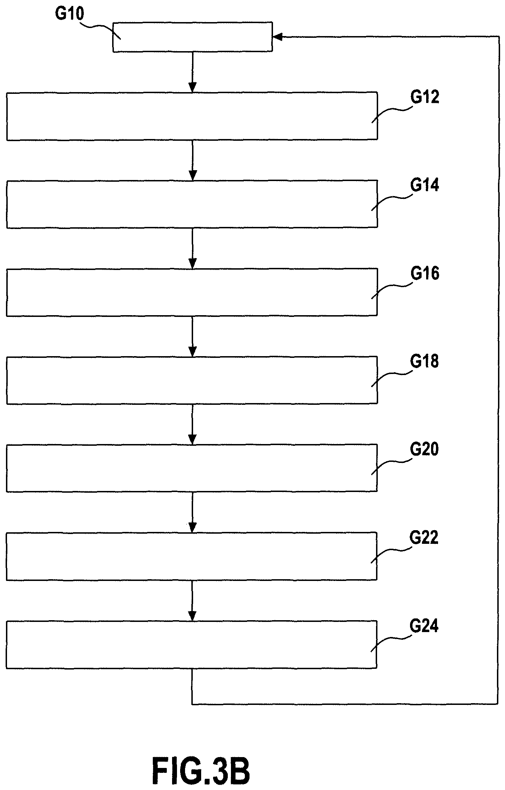

On suppose ici que le terminal T_{B} est doté d'un logiciel client IMS noté L, comportant une pile de protocole SIP, lui permettant de communiquer selon le protocole SIP avec le réseau IMS 20 et avec le serveur de routage 10. Le logiciel client IMS L comporte également un programme informatique adapté à exécuter les principales étapes du procédé de sélection selon l'invention, ces principales étapes étant représentées sous la forme d'un organigramme dans deux modes d'opération de l'invention sur les figures 3A et 3B décrites ultérieurement.

Le terminal T_{B} doté de ce logiciel constitue un terminal conforme à l'invention (premier terminal au sens de l'invention).

Afin de pouvoir recevoir des appels, le terminal T_{B} s'enregistre auprès du réseau IMS 20 à l'aide de la méthode SIP « REGISTER », décrite dans le document RFC 3265 « Session Initiation Protocol : Specific Event Notification », disponible sur le site de l'IETF, www.ietf.org/rfc.html. Au cours de cette étape, le terminal T_{B} fournit notamment, au réseau IMS 20, son identifiant SIP (SIP-URI ou TEL-URI) ainsi que son adresse IP courante. Ceci permettra par la suite au réseau IMS 20 de présenter par exemple au terminal T_{B} les appels lui étant destinés.

Par ailleurs, suite à la souscription de l'utilisateur B au service S pour les communications destinées au terminal T_{B}, on suppose que les terminaux mobiles T_{C1}, T_{C2} et T_{C3} vont télécharger un logiciel client IMS noté L', par des procédures de téléchargement classiques connues de l'homme du métier. Ce logiciel client IMS L' téléchargé sur chacun des terminaux T_{C1}, T_{C2} et T_{C3} comporte une pile de protocole SIP, leur permettant de communiquer selon le protocole SIP avec le réseau IMS 20 et avec le serveur de routage 10.

Le logiciel L' comporte également des instructions selon lesquelles un terminal doté de ce logiciel L' (ici T_{C1}, T_{C2} ou T_{C3}) notifie au serveur de routage 10 tout changement d'état parmi un ou plusieurs états définis dans la table D(ID_{B}). Par exemple ici, un terminal doit notifier au serveur de routage 10 tout changement d'état parmi les états (5), (6), (7) ou (8).

Dans l'exemple décrit ici, on suppose que selon les instructions du logiciel L', un terminal souscrit, sitôt après sa connexion au réseau mobile 60, au service S auprès du serveur de routage 10 par la méthode SIP « SUBSCRIBE », de sorte à informer le serveur de routage 10 qu'il est connecté au réseau 60 et connecté au service de routage S. Ce message de souscription envoyé par le terminal est à proprement parler une notification de changement d'état du terminal, i.e., le terminal notifie au serveur de routage via ce message qu'il passe dans un état « actif », et est ainsi adapté à recevoir un appel routé.

La table D(ID_{B}), associée à l'identifiant ID_{B} du terminal T_{B}, est mise à jour sur réception d'un message SIP « SUBSCRIBE » de l'un des terminaux T_{C1}, T_{C2} ou T_{C3} pour refléter le changement d'état de ce terminal. Ainsi, en référence à l'annexe 1, la colonne (8) est mise à jour.

Par ailleurs, au cours de cette mise à jour, d'autres états sont actualisés dans la table D(ID_{B}), selon des règles complémentaires prédéfinies au niveau du serveur de routage 10, par exemple par l'opérateur du service S. Ainsi dans l'exemple décrit ici, on suppose que les règles suivantes ont été prédéfinies pour la mise à jour de la table :
(R1) lorsqu'un passage à un état « connecté » est notifié par un terminal, l'état (5) est mis à jour en « allumé » ;
(R2) lorsqu'un passage à un état « éteint » est notifié par un terminal, l'état (6) est mis à jour en « non connecté » et l'état (8) en « non actif » ;
(R3) lorsqu'un passage à un état « actif » est notifié par un terminal, les états (5), (6) et (7) sont mis à jour en « allumé », « connecté » et « candidat » ;

Dans un autre mode de réalisation de l'invention on peut considérer la règle (R4) telle que :
(R4) l'état (7) est mis à jour en « non candidat » lorsque l'état (6) est « non connecté » ou l'état (8) est « non actif » ou l'état (5) est « éteint ».

En variante, d'autres règles complémentaires peuvent être prédéfinies pour la mise à jour de la table D(ID_{B}). Dans une autre variante, seuls les changements d'état notifiés par les terminaux via un message de notification sont mis à jour dans la table (équivalent au cas où aucune autre règle complémentaire de mise à jour de la table n'est prédéfinie).

Dans l'exemple décrit ici, le logiciel L' comporte également des instructions selon lesquelles, lorsqu'un terminal doté de ce logiciel L' (ici T_{C1}, T_{C2} ou T_{C3}) est éteint par son utilisateur (et donc en conséquence déconnecté du réseau 60), il envoie au préalable de son extinction un message SIP « PUBLISH » vers le serveur de routage 10 pour lui notifier son passage à l'état « éteint ». La méthode SIP « PUBLISH » est définie dans le document RFC 3903 «Session Initiation Protocol (SIP) Extension for Event State Publication » disponible sur le site www.ietf.org/rfc.html.

La table D(ID_{B}) est alors mise à jour par le serveur de routage 10 sur réception de ce message SIP « PUBLISH » de notification de changement d'état. L'état (5) du terminal est mis à jour en « éteint » et selon la règle prédéfinie (R2), l'état (6) du terminal est mis à jour en « non connecté » et l'état (8) du terminal est mis à jour en « non actif ».

Dans un autre mode de réalisation, si la règle (R4) a été prédéfinie pour la mise à jour, l'état (7) du terminal ayant notifié au serveur de routage son passage à l'état « éteint » est mis à jour en « non candidat ».

Le serveur de routage 10 conforme à l'invention représenté sur la figure 1 dispose donc de moyens de mettre à jour la table D(ID_{B}) de la base de données 15 sur réception d'un message d'un des terminaux T_{C1}, T_{C2} ou T_{C3} associés au terminal T_{B} notifiant un changement d'état de ce terminal. Les messages de notification (ex. message de souscription au service de routage) envoyés au serveur de routage 10 par les terminaux associés au terminal T_{B} permettent ainsi au serveur de routage 10 de détecter, lors de la réception d'un appel ou d'une requête de transfert d'appel pour le terminal T_{B}, en consultant la table D(ID_{B}) actualisée si le terminal fixe T_{B} est convergent, c'est-à-dire si il existe un terminal mobile actif associé au terminal T_{B}.

Nous allons maintenant décrire en référence aux **figures 2A-2B** **et 3A-3B** un procédé de routage d'un appel et un procédé de sélection d'un terminal selon l'invention, mis en oeuvre respectivement par le serveur de routage 10 et le terminal T_{B} tels que décrits précédemment en référence à la figure 1.

Comme vu précédemment, le serveur de routage 10 selon l'invention est adapté à gérer les renvois et/ou les transferts d'appel à destination d'un terminal :
- gestion d'un renvoi d'appel : dans ce cas, l'appel émis par un terminal T_{A} et destiné au terminal T_{B} (« premier terminal » au sens de l'invention) est routé vers un « terminal cible » T_{C1} avant que la communication ne soit établie entre le terminal T_{A} et le terminal T_{B}. Cette opération est décrite en référence aux figures 1, 2A et 2B ;
- gestion d'un transfert d'appel : dans ce cas, un appel émis par un terminal T_{A} et destiné au terminal T_{B} est tout d'abord établi entre les terminaux T_{A} et T_{B}. Puis sur requête du terminal T_{B} (« premier terminal » au sens de l'invention), le service S de routage d'appel est déclenché et permet de router l'appel établi vers un « terminal cible » T_{C1} en cours de communication. Cette opération est décrite en référence aux figures 1, 3A et 3B.

En référence aux figures 2A et 3A, dans les deux modes d'opération décrits ici, on suppose que le serveur de routage 10 se trouve dans un état de repos E10.

Au cours d'une étape E12, le serveur de routage 10 reçoit un message de souscription de l'utilisateur B au service S pour le terminal T_{B} (« premier terminal » au sens de l'invention). Comme décrit précédemment, lors de cette souscription au service S, l'utilisateur B du terminal T_{B} indique au serveur de routage 10 un identifiant ID_{B} de son terminal et les identifiants téléphoniques (i.e., les numéros de téléphones) ID_{C1}, ID_{C2}, ID_{C3} des terminaux T_{C1}, T_{C2} et T_{C3} respectivement à associer au terminal T_{B}, c'est-à-dire les identifiants des terminaux vers lesquels un appel destiné au terminal T_{B} peut être potentiellement routé. Pour chaque terminal T_{C1}, l'utilisateur B précise également ici deux identifiants supplémentaires, un nom et un numéro abrégé.

Les identifiants des terminaux T_{C1}, T_{C2} et à sont mémorisés au cours d'une étape E14 dans une table D(ID_{B}), associée à l'identifiant ID_{B} du terminal T_{B}, et stockée dans la base de données 15 du serveur de routage 10. Les états (5), (6), (7) et (8) associés à chacun des terminaux T_{C1}, T_{C2} et T_{C3} dans la table D(ID_{B}) sont initialisés au cours de cette étape comme décrit précédemment.

Suite aux étapes E12 de réception d'un message de souscription au service S et E14 de mémorisation des identifiants et d'initialisation des états des terminaux T_{C1}, T_{C2} et T_{C3} dans la table D(ID_{B}), le serveur de routage 10 passe de nouveau dans un état de repos E16.

On suppose qu'à divers moments, les terminaux mobiles T_{C1}, T_{C2} et T_{C3} associés au terminal fixe T_{B} sont allumés par leurs utilisateurs respectifs et qu'une fois connectés au réseau 60, ils souscrivent au service S pour le terminal T_{B} en envoyant chacun au serveur de routage 10 un message SIP « SUBSCRIBE » comme décrit précédemment.

Le message « SUBSCRIBE » envoyé par le terminal T_{C1} (respectivement T_{C2} et T_{C3}) est reçu par le serveur de routage 10 au cours d'une étape E18. Il s'agit d'un message de notification envoyé par le terminal T_{C1} au serveur de routage 10 pour lui signaler son passage à l'état « actif ».

Sur réception de cette notification de changement d'état du terminal T_{C1} (respectivement T_{C2} et T_{C3}), le serveur de routage 10 met à jour la table D(ID_{B}) au cours d'une étape E20. Ainsi, l'état (8) associé dans la table D(ID_{B}) au terminal T_{C1} (respectivement T_{C2} et T_{C3}) est mis à jour en « actif ». Par ailleurs, au cours de cette étape E20, la table D(ID_{B}) est également mise à jour selon les règles prédéfinies (R1), (R2) et (R3) décrites précédemment, qui conduisent à la mise à jour des états (5), (6) et (7) associés au terminal T_{C1} (respectivement T_{C2} et T_{C3}) en « allumé », « connecté » et « candidat ». Une fois la mise à jour de la table D(ID_{B}) effectuée, le serveur de routage 10 repasse dans l'état de repos E16.

Dans un autre mode de réalisation, le serveur de routage 10 peut vérifier que les terminaux mobiles souscrivant au service S par le message SUBSCRIBE pour le terminal T_{B} sont bien autorisés à être associés au terminal T_{B}, c'est-à-dire qu'ils sont autorisés par l'utilisateur B à être des candidats de routage potentiels pour recevoir un appel destiné initialement au terminal T_{B}. Ceci peut se faire par exemple en comparant l'identifiant téléphonique du terminal mobile souscrivant au service S à la liste des identifiants des terminaux mobiles associés au terminal T_{B} fournie par l'utilisateur B au cours de l'étape de souscription E12 et mémorisée dans la table D(ID_{B}).

Comme vu précédemment, conformément aux instructions contenues dans le logiciel L', si l'un des terminaux T_{C1}, T_{C2} et T_{C3} associés au terminal fixe T_{B}, par exemple le terminal T_{C3}, est éteint par son utilisateur, il envoie au préalable de son extinction un message SIP « PUBLISH » vers le serveur de routage 10 pour lui notifier spontanément son changement d'état, c'est-à-dire ici son passage à l'état « éteint ».

Ce message de notification envoyé par le terminal T_{C3} est reçu par le serveur de routage 10 au cours de l'étape E18. Au cours de l'étape E20, le serveur de routage 10 met à jour la table D(ID_{B}) : l'état (5) du terminal T_{C3} est mis à jour en « éteint », puis selon les règles prédéfinies (R2), les états (6) et (8) sont actualisés respectivement en « non connecté » et « non actif ». A l'issue de cette étape, la table D(ID_{B}) est telle que représentée en annexe 1.

Les étapes E18 de réception d'un message de notification d'un changement d'état et E20 de mise à jour de la table D(ID_{B}) sont reproduites à chaque fois qu'un terminal associé au terminal T_{B} change d'état et envoie spontanément une notification de ce changement d'état au serveur de routage 10. Ceci permet d'avoir au niveau du serveur de routage 10 une table D(ID_{B}) à jour en permanence pour procéder au routage de l'appel selon l'invention.

### Gestion d'un renvoi d'appel (en référence aux figures 1, 2A et 2B) :

On suppose maintenant qu'un utilisateur A du terminal T_{A} connecté au réseau de télécommunications 40 émet un message SIP « INVITE » à destination du terminal T_{B} de l'utilisateur B, comportant une requête R1 d'établissement d'appel avec le terminal T_{B} et un identifiant ID_{B} du terminal T_{B}.

Ce message transite via le réseau de télécommunications 40 pour atteindre le réseau IMS 20 (serveur S-CSCF), auquel la ligne associée au terminal T_{B} est reliée. Sur réception de ce message SIP « INVITE », le réseau IMS 20 déclenche le service S et renvoie le message « INVITE » vers le serveur de routage 10.

Ainsi, au cours d'une étape E22, le serveur de routage 10 reçoit le message « INVITE » comportant la requête R1 d'établissement de l'appel et l'identifiant ID_{B} du terminal T_{B}.

Le serveur de routage 10 extrait du message l'identifiant ID_{B} du terminal T_{B} destinataire du message reçu et consulte dans la base de données 15, la table D(ID_{B}) associée à l'identifiant ID_{B} du terminal T_{B}, au cours d'une étape E24. Cette consultation se fait selon des moyens de consultation connus de l'homme du métier, non décrits ici. A l'aide de la table D(ID_{B}), le serveur de routage 10 va établir une liste LID de terminaux, selon un ou plusieurs critères prédéterminés.

Dans l'exemple décrit ici, on établit la liste LID qu'avec des identifiants de terminaux actifs au sens de l'invention. Ainsi, au cours de l'étape E24, le serveur de routage 10 consulte la table D(ID_{B}) pour déterminer au cours d'une étape E26 si des terminaux sont actifs. Il examine notamment quels sont dans cette table D(ID_{B}), parmi les terminaux T_{C1}, T_{C2} et T_{C3} associés au terminal T_{B}, les terminaux dont l'état (8) est à la valeur « actif ».

D'après la table D(ID_{B}) représentée en annexe 1, seuls les terminaux T_{C1} et T_{C2} sont des terminaux actifs. Au cours d'une étape E27, le serveur de routage 10 établit la liste LID avec les identifiants des terminaux actifs T_{C1} et T_{C2} (ici, identifiant téléphonique ID_{Ci}, nom et identifiant abrégé pour chaque terminal).

La liste LID comporte en outre ici, pour chaque terminal, une information relative à l'état (8) de ce terminal, par exemple ici la mention « actif ». Dans un autre mode de réalisation, la liste LID comporte une information relative à un autre état du terminal ou à plusieurs états de ce terminal.

En variante, l'information relative à l'état du terminal peut être implicite et ne pas figurer explicitement dans la liste LID. Par exemple, lors de la souscription au service de routage, l'utilisateur du premier terminal a précisé qu'il ne désirait recevoir que des identifiants de terminaux actifs dans la liste LID.

En variante, seul l'identifiant téléphonique ID_{C3} est inclus dans la liste pour chaque terminal actif ainsi qu'une information relative à au moins un état de ce terminal.

En variante, au cours de l'étape E27, seul l'identifiant abrégé est inclus dans la liste pour chaque terminal actif (« 1 » pour le terminal T_{C1} et « 2 » pour le terminal T_{C2}, cf. annexe 1) ainsi qu'une information relative à au moins un état de ce terminal. La correspondance entre l'identifiant abrégé et l'identifiant téléphonique du terminal peut être retrouvée dans la table D(ID_{B}).

Les étapes E24 et E26 de consultation de la table D(ID_{B}) et d'analyse des états des terminaux de la table sont mises en oeuvre pour chaque appel destiné au terminal T_{B}, afin de proposer au terminal T_{B} une liste mise à jour comportant, pour un appel donné, les terminaux associés au terminal T_{B} ainsi qu'une indication de leur état au moment de l'appel. Ceci permet avantageusement à l'utilisateur B du terminal T_{B} d'effectuer une sélection tout en sachant quels terminaux sont *a priori* aptes à recevoir l'appel (terminaux « actifs ») ou au contraire pour lesquels il y a de fortes chances que l'appel soit routé vers un serveur de messagerie vocale (terminaux « éteints » mais « candidats »).

La liste LID est ajoutée textuellement par le serveur de routage 10 dans le message d'appel « INVITE ». Par exemple, la liste LID ajoutée au message d'appel se présente sous la forme suivante :
«1 = Pour renvoyer vers Papa (0611111111, actif)
2 = Pour renvoyer vers Maman (0622222222, actif) ».

En variante, l'état de chaque terminal n'est pas nécessairement représenté dans la liste des identifiants (ex. information implicite).

Au cours d'une étape E28, le serveur de routage 10 envoie le message d'appel « INVITE » au terminal T_{B} comportant d'une part la requête R1 d'établissement de l'appel avec le terminal T_{A} et d'autre part la liste LID.

Dans un autre mode de réalisation de l'invention, à l'étape E27, on établit la liste LID au serveur de routage 10 en reportant dans la liste LID tous les terminaux « candidats » au service S pour le terminal T_{B} (état (7) à « candidat » dans la table D(ID_{B})). Ceci inclut notamment les terminaux « candidats » et « éteints ». Dans ce cas, la liste LID comporte ici les identifiants des trois terminaux T_{C1}, T_{C2} et T_{C3}. Pour signaler à l'utilisateur B du terminal T_{B} que le terminal T_{C3} est éteint, la liste LID peut comporter également une information relative à l'état (5) du terminal T_{C3}. La liste LID des identifiants ajoutée au message d'appel « INVITE » se présente par exemple sous la forme suivante :
«1 = Pour renvoyer vers Papa (0611111111, actif)
2 = Pour renvoyer vers Maman (0622222222, actif)
3 = Pour renvoyer vers Alice (0633333333, éteint) ».

Les critères utilisés pour établir la liste LID peuvent être définis par exemple par l'opérateur du service S ou par l'utilisateur B du terminal T_{B} au moment de la souscription au service S. Il en est de même pour la sélection des états représentés dans la liste LID.

Dans un autre mode de réalisation de l'invention, on suppose qu'à l'étape E26, le serveur de routage 10 détermine que les trois terminaux T_{C1}, T_{C2} et T_{C3} sont non actifs, par exemple parce que tous trois sont éteints. Au cours d'une étape E36, le serveur de routage 10 envoie le message d'appel « INVITE » au terminal T_{B} comportant d'une part la requête R1 d'établissement d'appel et d'autre part une indication précisant qu'aucun terminal mobile associé au terminal T_{B} n'est actif et *a priori* apte à recevoir le renvoi d'appel.

Le terminal T_{B}, jusqu'à présent dans un état de repos F10 (cf. figure 2B), reçoit au cours d'une étape F12 via le réseau de télécommunications 50 le message d'appel « INVITE » envoyé par le serveur de routage 10 comportant la requête R1 d'établissement d'appel.

Comme décrit précédemment ce message comporte également la liste LID des identifiants des terminaux actifs T_{C1} et T_{C2} (ici tous connectés au réseau 60), associés au terminal T_{B}. Cette liste est présentée à l'utilisateur B du terminal T_{B} sur l'écran du terminal T_{B} en même temps que l'appel entrant (requête R1 signalée par exemple par une sonnerie), sous la forme proposée précédemment :
« Appel entrant du 0612312312
1 = Pour renvoyer vers Papa (0611111111, actif)
2 = Pour renvoyer vers Maman (0622222222, actif) ».

On suppose que l'utilisateur B décide de renvoyer l'appel vers le terminal T_{C1} identifié par ID_{C1}=0611111111, « Papa » et 1 dans la liste et appuie au cours d'une étape F14 sur la touche alphanumérique « 1 » du clavier du terminal T_{B}. Cette saisie sur le clavier est interprétée au niveau du terminal T_{B} par des moyens informatiques connus de l'homme du métier et permet de sélectionner dans la liste LID au niveau du terminal T_{B} l'identifiant abrégé « 1 » du terminal T_{C1} vers lequel l'utilisateur B désire renvoyer l'appel.

En variante, l'utilisateur B du terminal T_{B} saisit sur son clavier l'identifiant téléphonique ID_{C1} (i.e., 0611111111) du terminal T_{C1}.

En variante, lorsque T_{B} est un ordinateur, l'utilisateur B peut choisir le terminal vers lequel renvoyer l'appel en cliquant à l'aide de sa souris sur un élément quelconque de la ligne correspondant au terminal T_{C1} dans la liste LID. Cette opération est interprétée au niveau du terminal T_{B} par des moyens informatiques connus de l'homme du métier et permet de sélectionner au niveau du terminal T_{B} l'identifiant (par exemple ID_{C1}) du terminal T_{C1} vers lequel l'utilisateur B désire renvoyer l'appel.

Au cours d'une étape F16, l'identifiant abrégé du terminal cible sélectionné (ici l'identifiant abrégé « 1 » du terminal T_{C1}) est envoyé par le terminal T_{B} vers le serveur de routage 10 afin de router l'appel entrant vers le terminal T_{C1} ainsi identifié. L'identifiant du terminal T_{C1} est envoyé dans un message SIP « MESSAGE ».

Au cours d'une étape F18, le terminal T_{B} décline alors l'appel initial émis par le terminal T_{A}, à l'aide d'un message SIP « 603 DECLINE ». Cette étape permet de terminer proprement l'établissement d'appel SIP à destination du terminal T_{B}, qui en définitive ne sera pas pris sur le terminal T_{B}.

Au cours d'une étape E30, le serveur de routage 10 reçoit le message envoyé par le terminal T_{B} comportant l'identifiant du terminal sélectionné par le terminal T_{B} (identifiant du terminal T_{C1}), pour router l'appel émis par le terminal T_{A}. Le terminal T_{C1} ainsi sélectionné constitue un terminal cible au sens de l'invention. Le serveur de routage 10 extrait l'identifiant abrégé « 1 » du message reçu et consulte la table D(ID_{B}) pour obtenir l'identifiant téléphonique ID_{C1} du terminal T_{C1} correspondant à cet identifiant abrégé.

En variante, le message reçu par le serveur de routage 10 comporte déjà l'identifiant téléphonique ID_{C1} du terminal T_{C1}.

Au cours d'une étape E32, le serveur de routage 10 route l'appel émis par le terminal T_{A} à destination du terminal T_{B} vers le terminal cible T_{C1} à l'aide de l'identifiant ID_{C1}. A cette fin il renvoie l'appel vers le terminal T_{C1} en lui envoyant un message SIP « INVITE » qui transite via le réseau de télécommunications 60 jusqu'au terminal cible T_{C1}.

Une fois l'appel établi entre le terminal T_{A} et le terminal T_{C1}, le serveur de routage 10 envoie au terminal T_{B} au cours d'une étape E34, un message de confirmation (compris dans un message SIP « MESSAGE ») que l'appel émis par le terminal T_{A} a bien été renvoyé vers le terminal T_{C1}. Ce message de confirmation est reçu au cours d'une étape F20 par le terminal T_{B}.

### Gestion d'un transfert d'appel (en référence aux figures 1, 3A et 3B) :

Comme décrit précédemment, l'invention permet également à l'utilisateur B du terminal T_{B} de requérir le routage de l'appel émis par le terminal T_{A} en cours de communication, et non plus au préalable de l'établissement de la communication comme décrit dans le cas d'un renvoi d'appel. Il s'agit donc à proprement parler d'un transfert d'appel.

On suppose maintenant que le terminal T_{A} est un terminal de voix sur IP supportant le protocole SIP ainsi que la méthode SIP « REFER » définie dans le document RFC 3515 «The Session Initiation Protocol (SIP) Refer Method » disponible sur le site www.ietf.org/rfc.html. En référence à la figure 1, le réseau 40 est ici un réseau de VoIPoDSL.

On suppose que l'utilisateur A du terminal T_{A} connecté au réseau de télécommunications 40 émet un message d'appel à destination du terminal T_{B} de l'utilisateur B. Ce message est un message SIP « INVITE » comportant une requête R3 d'établissement de l'appel, non représentée sur la figure 1.

Le terminal T_{B} se trouvant dans un état de repos G10 (cf. figure 3B) reçoit, via le réseau de télécommunications 50, le message d'appel émis par le terminal T_{A} au cours d'une étape G12 (message comportant la requête R3 d'établissement d'appel). Au cours d'une étape G14, le terminal T_{B} prend l'appel, i.e., l'utilisateur B du terminal T_{B} décroche par exemple son terminal T_{B}.

En cours de communication, l'utilisateur B décide de transférer l'appel vers un autre terminal. Pour ce faire, il envoie au cours d'une étape G16 un message comportant une requête R2 de transfert de l'appel au serveur de routage 10, par exemple à l'aide d'un message SIP « MESSAGE ». Ce message comporte également un identifiant ID_{B} du terminal T_{B}. Au cours d'une étape E22' (cf. figure 3A), le serveur de routage 10 reçoit le message du terminal T_{B} comportant la requête R2 de transfert et l'identifiant ID_{B} du terminal T_{B}.

Les étapes suivantes mises en oeuvre au niveau du serveur de routage 10 :
- étape E24 de consultation de la table D(ID_{B}),
- étape E26 d'analyse des états des terminaux de la table D(ID_{B}) pour identifier quels terminaux associés au terminal T_{B} sont actifs, et
- étape E27 d'établissement de la liste LID le cas échéant,
ont été décrites précédemment pour la gestion d'un renvoi d'appel et se déroulent de manière similaire pour la gestion d'un transfert d'appel.

La liste LID ainsi établie est ajoutée textuellement par le serveur de routage 10 à un message SIP « MESSAGE » qui est envoyé au cours de l'étape E28' au terminal T_{B}. Cette liste comporte ici pour chaque terminal actif l'identifiant téléphonique de ce terminal ID_{Ci}.

Comme pour le renvoi d'appels, si le serveur de routage 10 détermine à l'étape E26 que les trois terminaux T_{C1}, T_{C2} et T_{C3} sont non actifs, il envoie au cours de l'étape E36' un message SIP « MESSAGE » au terminal T_{B} précisant qu'aucun terminal mobile associé au terminal T_{B} n'est actif et *a priori* apte à recevoir le renvoi d'appel.

Ainsi au cours d'une étape G18, le terminal T_{B} reçoit, via le réseau de télécommunications 50, le message SIP « MESSAGE » émis par le serveur de routage 10 comportant la liste LID des terminaux actifs associés au terminal T_{B}, cette liste comportant pour chaque terminal identifié une indication représentative d'au moins un état de ce terminal (ex. son état d'activité (8)).

Les étapes :
- G20 de sélection par le terminal T_{B} d'un identifiant d'un terminal parmi la liste LID envoyée par le serveur de routage 10 (on suppose ici que l'identifiant téléphonique ID_{C1} du terminal T_{C1} a été sélectionné par le terminal T_{B}, par exemple l'utilisateur B a saisi sur le clavier de son terminal l'identifiant ID_{C1} du terminal T_{C1}, saisie interprétée par des moyens connus de l'homme du métier par le terminal T_{B}), et
- G22 d'envoi vers le serveur de routage 10 de l'identifiant ID_{C1} ainsi sélectionné,
sont similaires aux étapes F14 et F16 décrites pour la gestion d'un renvoi d'appel.

Au cours de l'étape E30 précédemment décrite, le serveur de routage 10 reçoit du terminal T_{B} l'identifiant ID_{C1} du terminal T_{C1} sélectionné pour le routage de l'appel établi avec le terminal T_{A} (ici il s'agit d'un transfert d'appel). Le terminal T_{C1} ainsi sélectionné constitue un terminal cible au sens de l'invention.

Suite à cette étape E30, le serveur de routage 10 met en oeuvre au cours d'une étape E32' de routage de l'appel établi entre les terminaux T_{A} et T_{B} en vue du transfert de cet appel vers le terminal cible T_{C1}, Pour ce faire, il utilise la méthode SIP « REFER », qui lui permet d'envoyer au terminal T_{A} une requête de transfert de l'appel, comportant l'identifiant ID_{C1} du terminal T_{C1}.

On suppose que le terminal T_{A} accepte la requête et répond au serveur de routage 10 par un message SIP « 202 ACCEPTED ». Cet échange est clôturé par l'envoi d'un message SIP « NOTIFY » par le serveur de routage 10 au terminal T_{A} qui est acquitté par un message SIP « 200 OK ».

Le terminal T_{B} met alors fin à l'appel établi avec le terminal T_{A} au cours d'une étape G24 : l'utilisateur B raccroche par exemple son terminal T_{B} ce qui se traduit par l'envoi d'un message SIP « BYE » par T_{B} à T_{A}.

Le terminal T_{A} effectue automatiquement l'acte final du transfert d'appel en appelant automatiquement le terminal T_{C1} par un message SIP « INVITE ». L'appel est ensuite établi selon le protocole SIP, selon des moyens connus de l'homme du métier, tels que ceux décrits dans le document RFC 3261 «SIP : Session Initiation Protocol ».

Dans les deux modes d'opération décrits précédemment (renvoi et transfert d'appel), on suppose que le terminal T_{B} est un terminal connecté à un réseau de télécommunications 50 fixe supportant de la voix sur IP, c'est-à-dire en mode paquets. Cependant, cette hypothèse n'est en aucun cas limitative. En effet, l'invention peut être mise en oeuvre également lorsque le réseau de télécommunications 50 est un réseau de téléphonie fixe en mode circuit, par exemple à l'aide d'un réseau intelligent de 2^{ème} génération et des interfaces de programmation de type OSA (Open Service Access) telles que définies dans le standard 3GPP.

De même, dans les deux modes d'opération décrits précédemment, le terminal T_{B} est un terminal fixe et les terminaux T_{C1}, T_{C2} et T_{C3} associés au terminal T_{B} sont des terminaux mobiles. Cette hypothèse n'est en aucun cas limitative, l'invention pouvant être mise en oeuvre lorsque le terminal T_{B} est un terminal mobile et les terminaux T_{C1}, T_{C2} et T_{C3} sont des terminaux fixes.

### ANNEXE 1

| (1) | (2) | (3) | (4) | (5) | (6) | (7) | (8) |
|---|---|---|---|---|---|---|---|
| ID_{B} | ID_{C1} | Papa | 1 | Allumé | Connecté | Candidat | Actif |
| | ID_{C2} | Maman | 2 | Allumé | Connecté | Candidat | Actif |
| | ID_{C3} | Alice | 3 | Eteint | Non connecté | Candidat | Non actif |
| ID_{X} | ID_{Y1} | Bob | 5 | Allumé | Connecté | Non candidat | Non actif |
| | ID_{Y2} | Joe | 6 | Eteint | Non Connecté | Non candidat | Non actif |

## Revendications

1. Procédé de routage d'un appel destiné à un premier terminal (T_{B}) vers un terminal cible (T_{C1}) mis en oeuvre par un serveur de routage de l'appel, ledit procédé comportant :
- une étape (E20) de mise à jour d'une table (D(ID_{B})) associée à un identifiant dudit premier terminal (T_{B}), cette table comportant un identifiant d'au moins un second terminal (T_{C1},T_{C2},T_{C3}) et au moins un état de ce second terminal, ladite étape (E20) de mise à jour étant effectuée sur réception (E18) d'une notification émise par ledit second terminal (T_{C1},T_{C2},T_{C3}) pour signaler un changement d'un de ses états ;
- une étape (E27) d'établissement d'une liste (LID) à partir de ladite table (D(ID_{B})), ladite liste (LID) comportant au moins un identifiant d'un dit second terminal (T_{C1},T_{C2}) et une information relative à au moins un état dudit second terminal (T_{C1},T_{C2},T_{C3}), ladite étape (E27) d'établissement étant effectuée sur réception (E22,E22') d'un message (R1,R2) comportant un identifiant dudit premier terminal (T_{B}) ;
- une étape (E28,E28') d'envoi vers ledit premier terminal (T_{B}) de ladite liste (LID) ;
- une étape (E30) de réception en provenance dudit premier terminal (T_{B}) d'un identifiant dudit terminal cible (T_{C1}) sélectionné parmi ladite liste (LID) ; et
- une étape (E32,E32') de routage dudit appel vers ledit terminal cible (T_{C1}).

2. Procédé selon la revendication 1 **caractérisé en ce que** ledit message reçu comporte une requête (R1) d'établissement dudit appel.

3. Procédé selon la revendication 1 **caractérisé en ce que** ledit message reçu comporte une requête (R2) de transfert dudit appel.

4. Procédé selon l'une quelconque des revendications 1 à 3 **caractérisé en ce qu'**il comporte en outre, suite à ladite étape (E32,E32') de routage, une étape (E34) d'envoi vers ledit premier terminal (T_{B}) d'un message comportant une confirmation que ledit appel a été routé vers ledit terminal cible (T_{C1}).

5. Procédé selon l'une quelconque des revendications 1 à 4 **caractérisé en ce que**, au cours de ladite étape d'établissement (E27), on établit ladite liste (LID) avec au moins un identifiant d'un terminal (T_{C1},T_{C2}) actif.

6. Procédé selon l'une quelconque des revendications 1 à 5 **caractérisé en ce que**, au cours de ladite étape d'établissement (E27), on établit ladite liste (LID) avec au moins un identifiant d'un terminal (T_{C3}) éteint.

7. Programme d'ordinateur comportant des instructions pour l'exécution des étapes du procédé selon l'une quelconque des revendications 1 à 6 lorsque ledit programme est exécuté par un ordinateur.

8. Support d'enregistrement lisible par un ordinateur sur lequel est enregistré un programme d'ordinateur comprenant des instructions pour l'exécution des étapes du procédé selon l'une quelconque des revendications 1 à 6.

9. Serveur (10) de routage d'un appel destiné à un premier terminal (T_{B}) vers un terminal cible (T_{C1}) comportant :
- des moyens (14) pour recevoir une notification émise par un terminal (T_{C1},T_{C2},T_{C3}) pour signaler un changement d'un état de ce terminal ;
- des moyens (13,15) pour mettre à jour une table (D(ID_{B})) associée à un identifiant (ID_{B}) dudit premier terminal, cette table comportant un identifiant d'au moins un second terminal (T_{C1},T_{C2},T_{C3}) et au moins un état de ce second terminal ;
- des moyens (13,15) pour établir une liste (LID) à partir de ladite table (D(ID_{B})), ladite liste (LID) comportant au moins un identifiant d'un dit second terminal et une information relative à au moins un état dudit second terminal (T_{C1},T_{C2},T_{C3}), ladite liste étant établie sur réception d'un message (R1,R2) comportant un identifiant dudit premier terminal (T_{B}) ;
- des moyens (14) pour envoyer vers ledit premier terminal (T_{B}) ladite liste (LID) ;
- des moyens (14) pour recevoir en provenance dudit premier terminal (T_{B}) un identifiant (ID_{C1}) dudit terminal cible (T_{C1}) sélectionné parmi ladite liste (LID) ; et
- des moyens (13,14) pour router ledit appel vers ledit terminal cible (T_{C1}).

10. Procédé de sélection d'un terminal cible (T_{C1}), mis en oeuvre dans un premier terminal (T_{B}) connecté à un réseau (50) de télécommunications, en vue de router un appel destiné audit premier terminal (T_{B}) vers ledit terminal cible (T_{C1}), ledit procédé de sélection comportant :
- une étape (F12,G12) de réception d'un message comportant une requête (R1) d'établissement dudit appel ;
- une étape (F14,G20) de sélection parmi une liste (LID) d'un identifiant dudit terminal cible (T_{C1}) ;
ledit procédé de sélection étant **caractérisé en ce qu'**il comporte en outre :
- une étape de réception (F12,G18), via ledit réseau (50) de télécommunications, de ladite liste (LID) en provenance d'un serveur (10) de routage, ladite liste (LID) comportant au moins un identifiant d'un terminal et une information relative à au moins un état dudit second terminal (T_{C1},T_{C2},T_{C3}) ; et
- une étape (F16,G22) d'envoi audit serveur (10) de routage de l'identifiant dudit terminal cible (T_{C1}).

11. Procédé selon la revendication 10, **caractérisé en ce que** ladite liste (LID) reçue en provenance dudit serveur (10) de routage est incluse dans ledit message comportant ladite requête (R1) d'établissement dudit appel.

12. Procédé selon la revendication 10, **caractérisé en ce qu'**il comporte suite à ladite étape (G12) de réception dudit message comportant ladite requête (R1) d'établissement dudit appel, une étape (G14) de prise dudit appel et **en ce que** ladite étape (G18) de réception de ladite liste fait suite à une étape (G16) d'envoi vers ledit serveur (10) de routage d'un message comportant une requête (R2) de transfert dudit appel.

13. Programme (L) d'ordinateur comportant des instructions pour l'exécution des étapes du procédé selon l'une quelconque des revendications 10 à 12 lorsque ledit programme (L) est exécuté par un ordinateur.

14. Support d'enregistrement lisible par un ordinateur sur lequel est enregistré un programme (L) d'ordinateur comprenant des instructions pour l'exécution des étapes du procédé selon l'une quelconque des revendications 10 à 12.

15. Terminal (T_{B}) destiné à être connecté à un réseau (50) de télécommunications comportant :
- des moyens pour recevoir un message comportant une requête (R1) d'établissement d'un appel ; et
- des moyens pour sélectionner parmi une liste (LID) un identifiant (ID_{C1}) d'un terminal cible (T_{C1}) ;
ledit terminal (T_{B}) étant **caractérisé en ce qu'**il comporte en outre :
- des moyens pour recevoir, via ledit réseau (50) de télécommunications, une liste (LID) en provenance d'un serveur de routage (10), ladite liste comportant au moins un identifiant d'un terminal et une information relative à au moins un état dudit second terminal (T_{C1},T_{C2},T_{C3}) ; et
- des moyens pour envoyer ledit identifiant dudit terminal cible (T_{C1}) audit serveur (10) de routage.

16. Terminal (T_{B}) selon la revendication 15 **caractérisé en ce qu'**il comporte :
- des moyens pour prendre l'appel suite à la réception dudit message comportant ladite requête (R1) d'établissement dudit appel ; et
- des moyens pour envoyer audit serveur (10) de routage un message comportant une requête (R2) de transfert dudit appel.

17. Système de télécommunications (1) comportant :
- un serveur de routage (10) selon la revendication 9 ;
- un premier terminal (T_{B}) selon la revendication 15 ou 16 ; et
- au moins un second terminal (T_{C1},T_{C2},T_{C3}) adapté à envoyer audit serveur de routage une notification pour signaler un changement d'au moins un de ses états ;
ledit serveur de routage (10) permettant de router un appel destiné audit premier terminal (T_{B}) vers un terminal cible (T_{C1}) sélectionné parmi ledit au moins un second terminal (T_{C1},T_{C2},T_{C3}).

18. Système de télécommunications (1) selon la revendication 17 **caractérisé en ce que** ledit premier terminal (T_{B}) et ledit terminal cible (T_{C1}) sont connectés à des réseaux de télécommunications différents (50,60).

## Patentansprüche

1. Verfahren zum Weiterleiten eines Rufs, der für ein erstes Endgerät (T_{B}) bestimmt ist, an ein Zielendgerät (T_{C1}), das von einem Weiterleitungsserver des Rufs umgesetzt wird, wobei das Verfahren aufweist:
- einen Schritt (E20) des Aktualisierens einer Tabelle (D(ID_{B})), die einer Kennung des ersten Endgeräts (T_{B}) zugeordnet wird, wobei diese Tabelle eine Kennung von mindestens einem zweiten Endgerät (T_{C1}, T_{C2}, T_{C3}) und mindestens einen Zustand dieses zweiten Endgeräts aufweist, wobei der Schritt (E20) des Aktualisierens bei Empfangen (E18) einer Benachrichtigung, die von dem zweiten Endgerät (T_{C1}, T_{C2}, T_{C3}) ausgegeben wird, ausgeführt wird, um eine Änderung von einem seiner Zustände zu signalisieren;
- einen Schritt (E27) des Erstellens einer Liste (LID) ausgehend von der Tabelle (D(ID_{B})), wobei die Liste (LID) mindestens eine Kennung eines zweiten Endgeräts (T_{C1}, T_{C2}) und eine Information in Bezug auf mindestens einen Zustand des zweiten Endgeräts (T_{C1}, T_{C2}, T_{C3}) aufweist, wobei der Schritt (E27) des Erstellens bei Empfangen (E22, E22') einer Nachricht (R1, R2) durchgeführt wird, die eine Kennung des ersten Endgeräts (T_{B}) aufweist;
- einen Schritt (E28, E28') des Sendens der Liste (LID) an das erste Endgerät (T_{B});
- einen Schritt (E30) des Empfangens von dem ersten Endgerät (T_{B}) einer Kennung des Zielendgeräts (T_{C1}), die aus der Liste (LID) ausgewählt wird, und
- einen Schritt (E32, E32') des Weiterleitens des Rufs an das Zielendgerät (T_{C1}).

2. Verfahren nach Anspruch 1, **dadurch gekennzeichnet, dass** die empfangene Nachricht eine Anfrage (R1) zum Aufbauen eines Rufs aufweist.

3. Verfahren nach Anspruch 1, **dadurch gekennzeichnet, dass** die empfangene Nachricht eine Anfrage (R2) zum Umleiten des Rufs aufweist.

4. Verfahren nach einem der Ansprüche 1 bis 3, **dadurch gekennzeichnet, dass** es ferner nach dem Schritt (E32, E32') des Weiterleitens einen Schritt (E34) des Sendens an das erste Endgerät (T_{B}) einer Nachricht aufweist, die eine Bestätigung aufweist, dass der Ruf an das Zielendgerät (T_{C1}) weitergeleitet worden ist.

5. Verfahren nach einem der Ansprüche 1 bis 4, **dadurch gekennzeichnet, dass** bei dem Schritt des Aufbauens (E27) die Liste (LID) mit mindestens einer Kennung eines aktiven Endgeräts (T_{C1}, T_{C2}) erstellt wird.

6. Verfahren nach einem der Ansprüche 1 bis 5, **dadurch gekennzeichnet, dass** bei dem Schritt des Aufbauens (E27) die Liste (LID) mit mindestens einer Kennung eines ausgeschalteten Endgeräts (T_{C3}) erstellt wird.

7. Computerprogramm, das Anweisungen für die Ausführung der Schritte des Verfahrens nach einem der Ansprüche 1 bis 6 aufweist, wenn das Programm von einem Computer ausgeführt wird.

8. Computerlesbares Aufzeichnungsmedium, auf dem ein Computerprogramm aufgezeichnet ist, das Anweisungen für die Ausführung der Schritte des Verfahrens nach einem der Ansprüche 1 bis 6 aufweist.

9. Server (10) zum Weiterleiten eines Rufs, der für ein erstes Endgerät (T_{B}) bestimmt ist, an ein Zielendgerät (T_{C1}), umfassend:
- Mittel (14) zum Empfangen einer Benachrichtigung, die von einem Endgerät (T_{C1}, T_{C2}, T_{C3}) ausgegeben ist, um eine Änderung eines Zustands dieses Endgeräts zu signalisieren;
- Mittel (13,15), um eine Tabelle (D(ID_{B})) zu aktualisieren, die einer Kennung (ID_{B}) des ersten Endgeräts zugeordnet ist, wobei diese Tabelle eine Kennung von mindestens einem zweiten Endgerät (T_{C1}, T_{C2}, T_{C3}) und mindestens einen Zustand dieses zweiten Endgeräts aufweist;
- Mittel (13, 15) zum Erstellen einer Liste (LID) ausgehend von der Tabelle (D(ID_{B})), wobei die Liste (LID) mindestens eine Kennung eines zweiten zweiten Endgeräts und eine Information in Bezug auf mindestens einen Zustand des zweiten Endgeräts (T_{C1}, T_{C2}, T_{C3}) aufweist, wobei die Liste bei Empfangen einer Nachricht (R1, R2) durchgeführt wird, die eine Kennung des ersten Endgeräts (T_{B}) aufweist;
- Mittel (14) zum Senden der Liste (LID) an das erste Endgerät (T_{B});
- Mittel (14) zum Empfangen von dem ersten Endgerät (T_{B}) einer Kennung (ID_{C1}) des Zielendgeräts (T_{C1}), die aus der Liste (LID) ausgewählt ist, und
- Mittel (13, 14) zum Weiterleiten des Rufs an das Zielendgerät (T_{C1}).

10. Verfahren zum Auswählen eines Zielendgeräts (T_{C1}). das in einem ersten Endgerät (T_{B}) umgesetzt wird, das an ein Telekommunikationsnetz (50) angeschlossen ist, um einen Ruf, der für das erstes Endgerät (T_{B}) bestimmt ist, an das Zielendgerät (T_{C1}) weiterzuleiten, wobei das Verfahren zum Auswählen aufweist:
- einen Schritt (F12, G12) des Empfangens einer Nachricht, die eine Anfrage (R1) zum Aufbauen des Rufs aufweist;
- einen Schritt (F14, G20) des Auswählens einer Kennung des Zielendgeräts (T_{C1}) aus einer Liste (LID) ;
wobei das Verfahren zum Auswählen **dadurch gekennzeichnet ist, dass** es ferner aufweist:
- einen Schritt des Empfangens (F12, G18) über das Telekommunikationsnetz (50) der Liste (LID) von einem Server (10) zum Weiterleiten, wobei die Liste (LID) mindestens eine Kennung eines Endgeräts und eine Information in Bezug auf mindestens einen Zustand des zweiten Endgeräts (T_{C1}, T_{C2}, T_{C3}) aufweist, und
- einen Schritt (F16, G22) des Sendens an den Server (10) zum Weiterleiten der Kennung des Zielendgeräts (T_{C1}).

11. Verfahren nach Anspruch 10, **dadurch gekennzeichnet, dass** die empfangene Liste (LID) von dem Server (10) zum Weiterleiten in der Nachricht enthalten ist, die die Anfrage (R1) zum Aufbauen des Rufs aufweist.

12. Verfahren nach dem Anspruch 10, **dadurch gekennzeichnet, dass** es nach dem Schritt (G12) des Empfangens der Nachricht, die die Anfrage (R1) zum Aufbauen des Rufs aufweist, einen Schritt (G14) des Annehmens des Rufs aufweist und dass der Schritt (G18) des Empfangens der Liste einem Schritt (G16) des Sendens an den Server (10) zum Weiterleiten einer Nachricht folgt, die eine Anfrage (R2) zum Umleiten des Rufs aufweist.

13. Computerprogramm (L), das Anweisungen für die Ausführung der Schritte des Verfahrens nach einem der Ansprüche 10 bis 12 aufweist, wenn das Programm (L) von einem Computer ausgeführt wird.

14. Computerlesbares Aufzeichnungsmedium, auf dem ein Computerprogramm (L) aufgezeichnet ist, das Anweisungen für die Ausführung der Schritte des Verfahrens nach einem der Ansprüche 10 bis 12 aufweist.

15. Endgerät (T_{B}), das dazu bestimmt ist, an ein Telekommunikationsnetz (50) angeschlossen zu werden, umfassend:
- Mittel zum Empfangen einer Nachricht, die eine Anfrage (R1) zum Aufbauen eines Rufs aufweist, und
- Mittel zum Auswählen einer Kennung (ID_{C1}) eines Zielendgeräts (T_{C1}) aus einer Liste (LID);
wobei das Endgerät (T_{B}) **dadurch gekennzeichnet ist, dass** es ferner aufweist:
- Mittel zum Empfangen über das Telekommunikationsnetz (50) einer Liste (LID) von einem Server (10) zum Weiterleiten, wobei die Liste mindestens eine Kennung eines Endgeräts und eine Information in Bezug auf mindestens einen Zustand des zweiten Endgeräts (T_{C1}, T_{C2}, T_{C3}) aufweist, und
- Mittel zum Senden der Kennung des Zielendgeräts (T_{C1}) an den Server (10) zum Weiterleiten.

16. Endgerät (T_{B}) nach Anspruch 15, **dadurch gekennzeichnet, dass** es aufweist:
- Mittel zum Annehmen des Rufs nach dem Empfangen der Nachricht, die eine Anfrage (R1) zum Aufbauen eines Rufs aufweist, und
- Mittel zum Senden an den Server (10) zum Weiterleiten einer Nachricht, die eine Anfrage (R2) zum Umleiten des Rufs aufweist.

17. Telekommunikationssystem (1), umfassend:
- einen Server (10) zum Weiterleiten nach Anspruch 9;
- ein erstes Endgerät (T_{B}) nach Anspruch 15 oder 16 und
- mindestens ein zweites Endgerät (T_{C1}, T_{C2}, T_{C3}), das geeignet ist, um an den Server zum Weiterleiten eine Benachrichtigung zu senden, um eine Änderung von mindestens einem seiner Zustände zu signalisieren;
wobei der Server (10) zum Weiterleiten ermöglicht, einen Ruf, der für das erste Endgerät (T_{B}) bestimmt ist, an das Zielendgerät (T_{C1}) weiterzuleiten, das aus dem mindestens einen zweiten Endgerät (T_{C1}, T_{C2}, T_{C3}) ausgewählt ist.

18. Telekommunikationssystem (1) nach Anspruch 17, **dadurch gekennzeichnet, dass** das erste Endgerät (T_{B}) und das Zielendgerät (T_{C1}) an verschiedene Telekommunikationsnetze (50, 60) angeschlossen sind.

## Claims

1. Method for routing a call intended for a first terminal (T_{B}) to a target terminal (T_{C1}) implemented by a call routing server, said method comprising:
- a step (E20) of updating a table (D(ID_{B})) associated with an identifier of said first terminal (T_{B}), this table comprising an identifier of at least one second terminal (T_{C1}, T_{C2}, T_{C3}) and at least one state of this second terminal, said updating step (E20) being performed on reception (E18) of a notification sent by said second terminal (T_{C1}, T_{C2}, T_{C3}) to signal a change of one of its states;
- a step (E27) of establishing a list (LID) from said table (D(ID_{B})), said list (LID) comprising at least one identifier of one said second terminal (T_{C1}, T_{C2}) and an information item relating to at least one state of said second terminal (T_{C1}, T_{C2}, T_{C3}), said establishing step (E27) being performed on reception (E22,E22') of a message (R1,R2) including an identifier of said first terminal (T_{B}) ;
- a step (E28,E28') of sending said list (LID) to said first terminal (T_{B});
- a step (E30) of receiving, from said first terminal (T_{B}), an identifier of said target terminal (T_{C1}) selected from said list (LID); and
- a step (E32, E32') of routing said call to said target terminal (T_{C1}).

2. Method according to Claim 1, **characterized in that** said received message includes a request (R1) to set up said call.

3. Method according to Claim 1, **characterized in that** said received message includes a request (R2) to transfer said call.

4. Method according to any one of Claims 1 to 3, **characterized in that** it also comprises, following said routing step (E32,E32'), a step (E34) of sending to said first terminal (T_{B}) a message including a confirmation that said call has been routed to said target terminal (T_{C1}).

5. Method according to any one of Claims 1 to 4, **characterized in that**, during said establishing step (E27), said list (LID) is established with at least one identifier of an active terminal (T_{C1},T_{C2}).

6. Method according to any one of Claims 1 to 5, **characterized in that**, during said establishing step (E27), said list (LID) is established with at least one identifier of a terminal (T_{C3}) that is switched off.

7. Computer program comprising instructions for executing the steps of the method according to any one of Claims 1 to 6 when said program is run by a computer.

8. Computer-readable storage medium on which is stored a computer program comprising instructions for executing the steps of the method according to any one of Claims 1 to 6.

9. Server (10) for routing a call intended for a first terminal (T_{B}) to a target terminal (T_{C1}) comprising:
- means (14) for receiving a notification sent by a terminal (T_{C1},T_{C2},T_{C3}) to signal a change of state of this terminal;
- means (13,15) for updating a table (D(ID_{B})) associated with an identifier (ID_{B}) of said first terminal, this table including an identifier of at least one second terminal (T_{C1-} ,T_{C2},T_{C3}) and at least one state of this second terminal;
- means (13,15) for establishing a list (LID) from said table (D(ID_{B})), said list (LID) including at least one identifier of one said second terminal and an information item relating to at least one state of said second terminal (T_{C1},T_{C2},T_{C3}), said list being established on reception of a message (R1,R2) including an identifier of said first terminal (T_{B}) ;
- means (14) for sending said list (LID) to said first terminal (T_{B});
- means (14) for receiving, from said first terminal (T_{B}), an identifier (ID_{C1}) of said target terminal (T_{C1}) selected from said list (LID); and
- means (13,14) for routing said call to said target terminal (T_{C1}).

10. Method for selecting a target terminal (T_{C1}), implemented in a first terminal (T_{B}) connected to a telecommunications network (50), in order to route a call intended for said first terminal (T_{B}) to said target terminal (T_{C1}), said selection method comprising:
- a step (F12,G12) of receiving a message including a request (R1) to set up said call;
- a step (F14,G20) of selecting an identifier of said target terminal (T_{C1}) from a list (LID);
said selection method being **characterized in that** it also comprises:
- a step of receiving (F12,G18), via said telecommunications network (50), said list (LID) from a routing server (10), said list (LID) including at least one identifier of a terminal and an information item relating to at least one state of said second terminal (T_{C1-} ,T_{C2},T_{C3}) ; and
- a step (F16,G22) of sending the identifier of said target terminal (T_{C1}) to said routing server (10).

11. Method according to Claim 10, **characterized in that** said list (LID) received from said routing server (10) is included in said message including said request (R1) to set up said call.

12. Method according to Claim 10, **characterized in that** it includes, following said step (G12) of receiving said message including said request (R1) to set up said call, a step (G14) of taking said call and **in that** said step (G18) of receiving said list follows a step (G16) of sending, to said routing server (10), a message including a request (R2) to transfer said call.

13. Computer program (L) comprising instructions for executing the steps of the method according to any one of Claims 10 to 12 when said program (L) is run by a computer.

14. Computer-readable storage medium on which is stored a computer program (L) comprising instructions for executing the steps of the method according to any one of Claims 10 to 12.

15. Terminal (T_{B}) intended to be connected to a telecommunications network (50) comprising:
- means for receiving a message including a request (R1) to set up a call; and
- means for selecting an identifier (ID_{C1}) of a target terminal (T_{C1}) from a list (LID);
said terminal (T_{B}) being **characterized in that** it also comprises:
- means for receiving, via said telecommunications network (50), a list (LID) from a routing server (10), said list including at least one identifier of a terminal and an information item relating to at least one state of said second terminal (T_{C1},T_{C2},T_{C3}); and
- means for sending said identifier of said target terminal (T_{C1}) to said routing server (10).

16. Terminal (T_{B}) according to Claim 15, **characterized in that** it comprises:
- means for taking the call following the reception of said message including said request (R1) to set up said call; and
- means for sending a message including a request (R2) to transfer said call to said routing server (10).

17. Telecommunications system (1) comprising:
- a routing server (10) according to Claim 9;
- a first terminal (T_{B}) according to Claim 15 or 16; and
- at least one second terminal (T_{C1},T_{C2},T_{C3}) suitable for sending, to said routing server, a notification to signal a change of at least one of its states;
said routing server (10) allowing a call intended for said first terminal (T_{B}) to be routed to a target terminal (T_{C1}) selected from said at least one second terminal (T_{C1},T_{C2},T_{C3}).

18. Telecommunications system (1) according to Claim 17, **characterized in that** said first terminal (T_{B}) and said target terminal (T_{C1}) are connected to different telecommunications networks (50,60).
